# EUROPÄISCHE PATENTSCHRIFT

(11) **EP 3 126 701 B1**
(45) Veröffentlichungstag und Bekanntmachung des Hinweises auf die Patenterteilung: **15.07.2020**
(21) Anmeldenummer: 14715596.4
(22) Anmeldetag: 04.04.2014
(51) Int. Cl.: F16D 48/06

(54) **VERFAHREN ZUM STEUERN EINER AKTUIERUNGSANORDNUNG FÜR EINE KUPPLUNG UND ANTRIEBSANORDNUNG MIT EINER AKTUIERUNGSANORDNUNG**
METHOD FOR CONTROLLING AN ACTUATING ASSEMBLY FOR A CLUTCH, AND A DRIVE ASSEMBLY HAVING AN ACTUATING ASSEMBLY
PROCÉDÉ DE COMMANDE D'UN SYSTÈME D'ACTIONNEMENT D'UN EMBRAYAGE, ET SYSTÈME D'ENTRAÎNEMENT MUNI D'UN SYSTÈME D'ACTIONNEMENT

(43) Veröffentlichungstag der Anmeldung: 08.02.2017
(73) Patentinhaber: GKN Automotive Limited, Birmingham, West Midlands B37 7YE (GB)
(72) Erfinder: SORGE, Kai, 53757 Sankt Augustin (DE); FITZ, Rudolf, 53844 Troisdorf (DE); LEVEN, Stephan, 53844 Troisdorf (DE); BERNREUTHER, Frank, 53757 Sankt Augustin (DE); SCHMIDT, Mark, 53639 Königswinter (DE)
(74) Vertreter: Neumann Müller Oberwalleney & Partner Patentanwälte
(86) Internationale Anmeldenummer: PCT/EP2014/056863
(87) Internationale Veröffentlichungsnummer: WO 2015/149875

(56) Entgegenhaltungen:
- WO-A1-2005/093277
- WO-A1-2010/012485
- DE-A1-102007 008 977

## Beschreibung

Die Erfindung betrifft eine Aktuierungsanordnung zum Betätigen einer Kupplung im Antriebstrang eines Kraftfahrzeugs, insbesondere eines Kraftfahrzeugs mit Elektroantrieb. Ein Elektroantrieb kann als alleiniger Antrieb für das Kraftfahrzeug dienen oder es kann zusätzlich ein Verbrennungsmotor vorgesehen sein. In diesem Fall können der Elektroantrieb und der Verbrennungsmotor jeweils für sich oder gemeinsam überlagert das Kraftfahrzeug antreiben. Derartige Antriebskonzepte werden auch als "Hybridantrieb" bezeichnet.

Üblicherweise umfasst ein Elektroantrieb einen Elektromotor sowie ein nachgelagertes Untersetzungsgetriebe, das eine Drehbewegung vom Schnellen ins Langsame übersetzt. Vom Untersetzungsgetriebe wird das Drehmoment auf den Antriebsstrang des Kraftfahrzeugs übertragen. Hierfür teilt ein dem Untersetzungsgetriebe im Drehmomentfluss nachgelagertes Differentialgetriebe das eingeleitete Drehmoment auf zwei Ausgangswellen zum Antreiben der Fahrzeugräder auf. Die beiden Ausgangswellen des Differentialgetriebes haben untereinander eine ausgleichende Wirkung, das heißt dreht eine der beiden Ausgangswellen schneller, so dreht die andere Ausgangswelle entsprechend langsamer, und umgekehrt.

Aus der DE 10 2007 008 977 A1 ist ein Verfahren zum Steuern einer Kupplung im Antriebsstrang eines Fahrzeugs bekannt, bei dem das Kupplungsmoment in einem ersten Bereich des Kupplungsmoments in Abhängigkeit von der Stellung des Betätigungsgliedes und in einem zweiten Bereich in Abhängigkeit von der vom Betätigungsglied auf die Kupplung aufgebrachten Kraft gesteuert wird. In der Steuereinrichtung sind zwei Kennlinien hinterlegt, eine für die Steuerung in Abhängigkeit von der Position und eine für die Steuerung in Abhängigkeit von der Kraft, sowie eine Umschalteinrichtung, die die Steuerung des Aktors von der einen Kennlinie auf die andere umschaltet.

Aus der WO 2012/087700 A1 ist ein Elektroantriebsmodul mit einem Elektromotor, einem Planetengetriebe, einer Synchronisiereinheit, einem Untersetzungsgetriebe und einer Differentialanordnung bekannt. Die Synchronisiereinheit wird mittels eines Aktuators betätigt, der einen drehend antreibbaren Spindeltrieb zum axialen Bewegen einer Schaltgabel umfasst, die mit einer Schiebemuffe der Synchronisiereinheit zusammenwirkt.

Aus der WO 2007/110131 A1 ist eine Aktuierungsanordnung für eine Schaltkupplung eines Stufenwechselgetriebes bekannt. Die Aktuierungsanordnung umfasst eine elektrische Maschine, eine hiervon antreibbare Drehwelle und ein auf der Drehwelle angeordnetes Betätigungsglied. Das Betätigungsglied ist über einen Rotations-Translations-Wandler mit einem Rotor der elektrischen Maschine gekoppelt.

Aus der DE 10 2006 011 207 A1 ist eine Sensoranordnung zum Erfassen einer Position eines beweglichen Elements bekannt. Die Sensoranordnung umfasst einen Magnetfeldsensor, der in unterschiedlichen Positionen des beweglichen Elements unterschiedliche Magnetfeldstärken erfasst.

Aus der WO 2005/098269 A2 ist ein automatisiertes Schaltgetriebe mit mehreren Gangstufen bekannt, die mittels jeweiliger Schaltkupplungen ein- und auslegbar sind. Die Schaltkupplungen sind in Form von Synchronkupplungen gestaltet, die mittels einer axial verschiebbaren Schaltmuffe betätigt werden. Die Schaltmuffe wird mittels eines steuerbaren Aktuators betätigt.

Aus der DE 10 2005 022 926 B3 ist ein Verfahren zum Optimieren des Schaltablaufs eines Stufengetriebes eines Kraftfahrzeugs bekannt. Das Stufengetriebe weist mehrere Gangstufen auf, die mittels jeweiliger Schaltkupplungen ein- und auslegbar sind.

Der Schaltablauf sieht vor, dass ein toleranz- und/oder verschleißabhängiger Parameter erfasst und ein dem Parameter entsprechender Weg-Sollwert eines Schaltglieds der Schaltkupplung eingestellt wird.

Elektroantriebe mit Mehrganggetriebe mit Kupplungsschaltung benötigen einen erheblichen baulichen Aufwand für die Kupplungen und die Aktuatorik. Mehrganggetriebe mit Synchronisiereinheit erfordern hohe Schaltkräfte, was hohe Anforderungen an den Aktuator stellt. Ferner können Fertigungstoleranzen und über die Lebensdauer auftretender Verschleiß zu Schaltungenauigkeiten führen.

Der vorliegenden Erfindung liegt die Aufgabe zugrunde, ein Verfahren zum Steuern einer Aktuierungsanordnung für eine Kupplung vorzuschlagen, das ein komfortables oder schnelles Schalten und eine Kompensation von Lageveränderungen durch veränderliche Toleranzlagen der Einzelteile und Verschleiß während der Lebensdauer ermöglicht. Weiter besteht die Aufgabe darin, eine Aktuierungsanordnung zur Durchführung des Verfahrens vorzuschlagen, sowie eine Antriebsanordnung mit einer solchen Aktuierungsanordnung.

Eine Lösung besteht in einem Verfahren zum Steuern einer Aktuierungsanordnung für eine Kupplungseinheit im Antriebsstrang eines Kraftfahrzeugs, wobei die Aktuierungsanordnung einen Aktuatorantrieb zum Verschieben eines Betätigungselements zum Betätigen der Kupplung aufweist, wobei das Verfahren die folgenden Schritte aufweist: Sensieren eines die Position des Betätigungselements repräsentierenden Positionssignals; Sensieren eines die Betätigungskraft zum Verschieben des Betätigungselements repräsentierenden Kraftsignals; Verknüpfen eines sensierten Positionssignals und eines zugehörigen sensierten Kraftsignals zur Bestimmung einer genauen Position des Betätigungselements; und Steuern des Aktuatorantriebs mittels einer elektronischen Regeleinheit in Abhängigkeit vom Positionssignal und vom hiermit verknüpften Kraftsignal.

Dadurch, dass zum Steuern des Aktuatorantriebs sowohl ein Positionssignal als auch ein Kraftsignal berücksichtigt werden, kann bei Betrieb eine Kalibrierung der Aktuierungsanordnung vorgenommen werden. Auf diese Weise ist es möglich, sich über der Lebensdauer ergebende Lageveränderungen von an der Betätigung der Kupplung beteiligten Bauteilen zu berücksichtigen. Des Weiteren können in vorteilhafter Weise Fertigungstoleranzen und Elastizitäten der beteiligten Bauteile ausgeglichen werden. Insgesamt bietet das Verfahren damit den Vorteil einer besonders robusten und zuverlässigen Steuerung über der gesamten Lebensdauer der Kupplung beziehungsweise der Aktuierungsanordnung.

Das Positionssignal kann nach einer ersten Möglichkeit ein Wegsignal sein, das heißt zur Bestimmung der Position des Betätigungselements wird ein den Weg des Betätigungselements repräsentierenden Wegsignal sensiert, beispielsweise mittels eines berührungslosen Wegsensors. Alternativ oder in Ergänzung kann das Positionssignal ein Drehsignal sein, das heißt zur Bestimmung der Position des Betätigungselements wird ein die Drehbewegung des Aktuatorantriebs repräsentierendes Drehsignal sensiert, aus dem die Position des Betätigungselements ermittelt wird.

Vorzugsweise wird bei einem ersten Kupplungsvorgang eine Endposition des Betätigungselements, welche einen Endanschlag der Kupplungseinheit in Schließstellung repräsentiert, durch einen sprunghaften Anstieg des Kraftsignals sensiert und ein zugehöriger Endpositionswert gespeichert. Ferner ist vorgesehen, dass bei zumindest einem späteren Kupplungsvorgang, der zeitlich nach dem ersten Kupplungsvorgang erfolgt, der Endpositionswert von der elektronischen Regeleinheit beim Ansteuern des Aktuatorantriebs derart berücksichtigt wird, dass das Betätigungselement vor Erreichen der Endposition abgebremst wird. Durch das Abbremsen des Betätigungselements bzw. eines damit verbundenen Koppelelements vor Erreichen der Endposition können ungewünschte Anschlaggeräusche der Kupplungseinheit vermieden und der Schaltkomfort erhöht werden. Vorzugsweise wird der Endpositionswert auf Basis eines zum Zeitpunkt des sprunghaften Anstiegs des Kraftsignals sensierten Positionssignals definiert. Das bedeutet, dass ein Kraftsignal und ein zugehöriges Positionssignal miteinander verknüpft werden, so dass hierüber die genaue Position des Betätigungselements bzw. des damit verbundenen Koppelelements ziehen lassen.

Nach Erreichen der Endposition wird das Betätigungselement nach einer bevorzugten Verfahrensführung um einen definierten Weg in eine von der Endposition axial beabstandete Kuppelposition zurückbewegt. Hiermit werden Reibungskräfte im eingekuppelten Zustand vermieden, da in der Aktuierungsanordnung bzw. in der Kupplungseinheit durch das geringfügige Zurückfahren des Betätigungselements Axialspiel eingestellt wird. Der axiale Abstand zwischen der Endposition und der Kuppelposition bzw. der Weg, um den das Betätigungselement wieder zurückgefahren wird, beträgt vorzugsweise zwischen Null und 1,0 mm. Dieser Abstand kann je nach Verschleißsituation nachgestellt werden, was die Funktionsfähigkeit und Lebensdauer des Getriebes und gegebenenfalls eines Synchronisiermechanismus verlängert.

Bei einem späteren Kupplungsvorgang kann der Aktuatorantrieb derart angesteuert werden, dass das Betätigungselement direkt in die Kuppelposition bewegt wird, das heißt vor Erreichen der Endposition in der Kuppelposition gestoppt wird. Hiermit wird ein ungewünschtes Anschlaggeräusch verhindert, wobei die Kupplungsposition dennoch zuverlässig erreicht wird, und zwar aufgrund der vorherigen Kalibrierung am Endanschlag. Mit späterem Kupplungsvorgang ist jeder Kupplungsvorgang gemeint, der zeitlich nach einem vorherigen Kupplungsvorgang erfolgt, bei dem die Steuerung durch Anfahren des Endanschlags kalibriert wurde. Ob die Kupplungsposition direkt angefahren wird oder erst nach einem vorherigen Anfahren des Endanschlags kann nach Bedarf eingestellt werden und auf Basis von in der elektronischen Regeleinheit hinterlegten Algorithmen erfolgen. Beispielsweise kann definiert werden, dass die Kupplungsposition direkt angefahren wird, wenn ein schneller Kupplungsvorgang gewünscht ist wie beim Schalten von einem Gang in den nächsten während eines Beschleunigungsvorgangs. Ein indirektes Anfahren der Kupplungsposition nach vorherigem Anfahren des Endanschlags kann bei einem Kupplungsvorgang unter normaler Last erfolgen. Die Kuppelposition kann auch als Gangposition bezeichnet werden. Nur durch die getriebeindividuelle Kenntnis der Lagen kann eine Gangposition direkt angefahren werden, ohne gleichzeitig die Schaltrobustheit zu vermindern. Die Gefahr, dass der Abstand zum Endanschlag zu groß ist und der Gang ungewünscht herausspringt, ist deutlich reduziert.

Die Kupplungseinheit kann einen Synchronisiermechanismus aufweisen, welcher in einer Synchronisierposition des Betätigungselements eine erste Drehzahl eines Kupplungseingangsteils und eine zweite Drehzahl eines Kupplungsausgangsteils aneinander angleicht. Bei einer Ausführungsform mit Synchronisiermechanismus kann der Aktuatorantrieb beim Kupplungsvorgang derart angesteuert werden, dass die Vorschubgeschwindigkeit des Betätigungselements vor Erreichen der Synchronisierposition reduziert wird. Auch hier gilt, dass die Steuerung unter Berücksichtigung der Erfordernisse an das Fahrverhalten des Kraftfahrzeugs eingestellt werden kann. Ist ein komfortabler Kuppel- bzw. Schaltvorgang gewünscht, kann die Vorschubgeschwindigkeit vor Erreichen der Synchronisierposition reduziert werden, um ungewünschte Schaltgeräusche zu vermeiden. Nach der Synchronisierphase, das heißt wenn eine relative Drehzahldifferenz zwischen dem Kupplungseingangsteil und dem Kupplungsausgangsteil unter einen vorbestimmten Differenzdrehzahlwert gefallen ist, kann die Vorschubgeschwindigkeit des Betätigungselements dann wieder erhöht werden, um in die Kupplungsposition gefahren zu werden. Steht jedoch ein schnelles Kuppeln bzw. Schalten im Vordergrund kann das Betätigungselement auch mit unveränderter Vorschubgeschwindigkeit bis zum Erreichen der Kupplungsposition bewegt werden.

Nach einer möglichen Verfahrensführung wird das Betätigungselement wieder in die Neutralposition zurückgefahren, wenn die relative Drehzahldifferenz zwischen Kupplungseingangsteil und Kupplungsausgangsteil nach einer vorgegebenen Zeitdauer noch immer größer ist als der vorbestimmte Differenzdrehzahlwert. Diese vorgegebene Zeitdauer bis zum Abbrechen des Kupplungsvorgangs kann insbesondere zwischen 0,3 bis 0,7 Sekunden betragen.

Der Aktuatorantrieb für das Betätigungselement ist nach einer möglichen Ausgestaltung in Form eines Elektromotors gestaltet, wobei andere Antriebe wie hydraulische oder pneumatische Drehantriebe, aber auch Linearantriebe ebenso denkbar sind. Bei elektrisch betriebenen Antrieben umfasst der Verfahrensschritt des Sensierens des Kraftsignals vorzugsweise die folgenden Teilschritte: Sensieren der Stromstärke des Aktuatorantriebs und Berechnen der Kraft des Betätigungselements aus der ermittelten Stromstärke bzw. Strombedarfs des Aktuatorantriebs. Durch diese Ausgestaltung wird in vorteilhafter Weise auf ein ohnehin zur Verfügung stehendes Signal zurückgegriffen, nämlich ein den Strombedarf des Aktuatorantriebs repräsentierendes Signal.

Die Lösung der oben genannten Aufgabe besteht weiter in einer Antriebsanordnung nach Anspruch 9 mit einer Kupplungseinheit für den Antriebsstrang eines Kraftfahrzeugs, insbesondere für einen elektromotorisch antreibbaren Antriebsstrang eines Kraftfahrzeugs, und mit einer Aktuierungsanordnung zum Betätigen der Kupplungseinheit. Die Kupplungseinheit ist mittels der Aktuierungsanordnung wahlweise in eine Kupplungsposition überführbar, in der Drehmoment zwischen einem Kupplungseingangsteil und einem Kupplungsausgangsteil übertragen wird, und in eine Neutralposition, in der das Kupplungseingangsteil und das Kupplungsausgangsteil frei gegeneinander drehbar sind, wobei die Kupplungseinheit einen Synchronisiermechanismus umfasst, der vor dem Schließen in die Kupplungsposition eine Drehzahlangleichung zwischen dem Kupplungseingangsteil und dem Kupplungsausgangsteil bewirkt. Die Aktuierungsanordnung umfasst einen Aktuatorantrieb mit einer drehend antreibbaren Welle; einen Rotations-Translations-Wandler, der eine Drehbewegung der Welle in eine translatorische Bewegung eines Betätigungselements umwandelt; erste Sensormittel, die ein die translatorische Bewegung des Betätigungselements repräsentierendes Positionssignal sensieren; zweite Sensormittel, die ein die Kraft des Aktuatorantriebs repräsentierendes Kraftsignal sensieren; und eine elektronische Regeleinheit zur Steuerung des Aktuatorantriebs, wobei die elektronische Regeleinheit mit den ersten Sensormitteln und mit den zweiten Sensormitteln verbunden ist, um ein sensiertes Positionssignal und ein sensiertes Kraftsignal zur genauen Positionsbestimmung des Betätigungselements miteinander zu verknüpfen und zur Steuerung des Aktuatorantriebs zu verwenden.

Mit der Antriebsanordnung werden dieselben Vorteile erreicht, wie mit dem oben genannten Verfahren, auf dessen Beschreibung hier Bezug genommen wird. Dabei versteht es sich, dass alle im Zusammenhang mit dem Verfahren genannten Ausgestaltungen auch auf die Vorrichtung (Antriebsanordnung) übertragbar sind bzw. für diese gelten, und umgekehrt, alle Vorrichtungsmerkmale auch für das Verfahren gelten. Die erfindungsgemäße Antriebsanordnung ermöglicht aufgrund der zwei verwendeten Sensormittel eine Kalibrierung, so dass alle über der Lebensdauer auftretende Veränderungen bei der Ansteuerung der Aktuierungsanordnung berücksichtigt werden können. Die Aktuierungsanordnung arbeitet damit besonders robust und zuverlässig, das heißt das Risiko von Fehlschaltungen ist minimiert.

Die ersten Sensormittel umfassen nach einer ersten Möglichkeit einen insbesondere berührungslos arbeitenden Wegsensor, welcher zumindest mittelbar eine Bewegung des Betätigungselements als Positionssignal sensiert. Hierfür können die ersten Sensormittel beispielsweise einen Magnetfeldsensor aufweisen, der in einem Gehäuse der Aktuierungsanordnung angeordnet ist und die Bewegung eines mit dem Betätigungselement verbundenen Signalgebers erfassen kann. Die axiale Position des Signalgebers kann vom Sensor stufenlos sensierbar sein. Der Signalgeber, beispielsweise ein Magnet, kann unmittelbar mit dem Betätigungselement verbunden sein, oder mittelbar über ein mit dem Betätigungselement verbundenes Bauteil. Nach einer ergänzenden oder alternativen zweiten Möglichkeit können die ersten Sensormittel einen Drehwinkelsensor aufweisen, welcher zumindest mittelbar eine Drehbewegung des Aktuatorantriebs als Positionssignal sensiert, wobei aus der sensierten Drehbewegung des Aktuatorantriebs die Position des Betätigungselements ermittelt wird.

Die zweiten Sensormittel weisen vorzugsweise einen Stromsensor auf, der den Strombedarf des Aktuatorantriebs sensiert. Aus dem Strombedarf kann in einer Recheneinheit die am Betätigungselement wirksame Axialkraft berechnet werden.

Der Rotations-Translations-Wandler umfasst vorzugsweise eine Gewindespindel mit einem Spindelteil, das von der Welle drehend antreibbar ist, und einem mit dem Spindelteil schraubverbundenen Verschiebeteil. Das Verschiebeteil ist gegenüber einem Gehäuse drehfest und längsverschieblich geführt, so dass eine Drehung des Spindelteils eine axiale Verschiebung des Verschiebeteils bewirkt. Vorzugsweise ist das Verschiebeteil hülsen- oder rohrförmig gestaltet und hat an einem Endabschnitt ein Innengewinde, das auf ein gegengleiches Außengewinde des Spindelteils aufgeschraubt ist. An den beiden Endabschnitten kann das rohrförmige Verschiebeteil in dem Gehäuse längsverschiebbar gelagert werden. Das Betätigungselement, das beispielsweise in Form einer Schaltgabel gestaltet sein kann, ist an dem Verschiebeteil fixiert, so dass es gemeinsam mit diesem axial bewegt wird. Der Signalgeber für den Wegsensor ist nach einer günstigen Ausgestaltung mit dem Verschiebeteil verbunden.

Die Antriebsanordnung kann eine oder mehrere der oben genannten Ausgestaltungen haben. Die Kupplungseinheit kann eine oder mehrere Kupplungen aufweisen. Die Kupplungseinheit ist mittels der Aktuierungsanordnung wahlweise in eine Kupplungsposition überführbar, in der Drehmoment zwischen einem Kupplungseingangsteil und einem Kupplungsausgangsteil übertragen wird, und in eine Neutralposition, in der das Kupplungseingangsteil und das Kupplungsausgangsteil frei gegeneinander drehbar sind.

Die Antriebsanordnung kann insbesondere Teil eines Elektroantriebs sein, der einen Elektromotor zum Antreiben des Fahrzeug-Antriebsstrangs hat. Alternativ hierzu kann die Antriebsanordnung Teil eines Allrad-Abschaltsystems gestaltet sein, das heißt als Abschaltsystem für ein allradgetriebenes Kraftfahrzeug. Für beide Ausgestaltungen, Elektroantrieb oder Allrad-Abschaltsystem, gilt, dass diese relativ hohe Massenträgheiten aufweisen, weswegen sich hier die feinfühlige Steuerung der Aktuierung auf Basis von Positions- und Kraftsignalen besonders gut eignet, um ein Abgleich mit anderen Systemen vornehmen zu können.

Die Kupplungseinheit umfasst einen Synchronisiermechanismus, der vor dem Schließen der jeweiligen Kupplung eine Drehzahlangleichung zwischen dem Kupplungseingangsteil und dem Kupplungsausgangsteil bewirkt.

Vorzugsweise ist das Kupplungseingangsteil mit einer Antriebswelle drehfest verbunden, und das Kupplungsausgangsteil ist mit einem auf der Antriebswelle drehbar gelagerten Antriebsrad drehfest verbunden.

Nach einer möglichen Ausgestaltung kann eine zweite Kupplung vorgesehen sein, die mittels der Aktuierungsanordnung wahlweise in eine Schließstellung oder in eine Offenstellung überführbar ist. Das zweite Kupplungsausgangsteil ist vorzugsweise mit einem auf der Antriebswelle drehbar gelagerten zweiten Antriebsrad drehfest verbunden. Die erste und zweite Kupplung können in diesem Fall Teile eines Schaltgetriebes sein, welches durch Schließen der ersten Kupplung Drehmoment über eine erste Gangstufe mit einem ersten Übersetzungsverhältnis von der Antriebswelle auf die Abtriebswelle übertragen kann, oder durch Schließen der zweiten Kupplung entsprechend mit einem zweiten Übersetzungsverhältnis Drehmoment übertragen kann.

Vorzugsweise ist ein Koppelelement vorgesehen, das mit dem Betätigungselement der Aktuierungsanordnung fest verbunden ist, wobei das Koppelelement in folgende Positionen überführbar ist: eine Neutralposition, in der das Kupplungseingangsteil, das erste Kupplungsausgangsteil und das zweite Kupplungsausgangsteil frei gegeneinander drehbar sind; eine erste Kuppelposition, in der das Kupplungseingangsteil mit dem ersten Kupplungsausgangsteil zur Übertragung eines Drehmoments verbunden ist; oder in eine zweite Kuppelposition, in der das Kupplungseingangsteil mit dem zweiten Kupplungsausgangsteil zur Übertragung eines Drehmoments verbunden ist. Das Koppelelement ist nach einer bevorzugten Ausgestaltung in Form einer Schiebemuffe gestaltet, die gegenüber dem Kupplungseingangsteil drehfest und axial verschiebbar gehalten ist. Durch Betätigen der Aktuierungsanordnung kann die Schiebemuffe wahlweise in die genannten Positionen überführt werden.

Bevorzugte Ausführungsbeispiele werden nachstehend anhand der Zeichnungsfiguren erläutert. Hierin zeigt:
- Figur 1: eine erfindungsgemäße Antriebsanordnung mit einer erfindungsgemäßen Aktuatoranordnung in einer Schnittdarstellung;
- Figur 2: die Aktuierungsanordnung aus Figur 1 im Detail;
- Figur 3: die Antriebswelle 9 aus Figur 1 bzw. Figur 2 mit darauf montierten Bauteilen als Detail;
- Figur 4: schematisch eine erfindungsgemäße Antriebsanordnung mit Elektromotor;
- Figur 5: die Antriebsanordnung aus Figur 4 in Neutralstellung (N);
- Figur 6: die Antriebsanordnung aus Figur 4 in einer ersten Schaltstellung (C1);
- Figur 7: die Antriebsanordnung aus Figur 4 in einer zweiten Schaltstellung (C2);
- Figur 8: die Anordnung aus Figur 3 in Neutralposition (N)
a) im Längsschnitt;
b) einen Teil der Verzahnung in Abwicklung;
c) ein Kennlinien-Diagramm, welches verschiedene Parameter über der Zeit zeigt;
- Figur 9: die Anordnung aus Figur 3 in Synchronisierposition (S)
a) im Längsschnitt;
b) einen Teil der Verzahnung in Abwicklung;
c) das Kennlinien-Diagramm aus Figur 8c);
- Figur 10: die Anordnung aus Figur 3 in Gleichlaufposition
a) im Längsschnitt;
b) einen Teil der Verzahnung in Abwicklung;
c) das Kennlinien-Diagramm aus Figur 8c);
- Figur 11: die Anordnung aus Figur 3 in Formschlussposition
a) im Längsschnitt;
b) einen Teil der Verzahnung in Abwicklung;
c) das Kennlinien-Diagramm aus Figur 8c);
- Figur 12: die Anordnung aus Figur 3 in Kupplungsposition (C1)
a) im Längsschnitt;
b) einen Teil der Verzahnung in Abwicklung;
c) das Kennlinien-Diagramm aus Figur 8c).

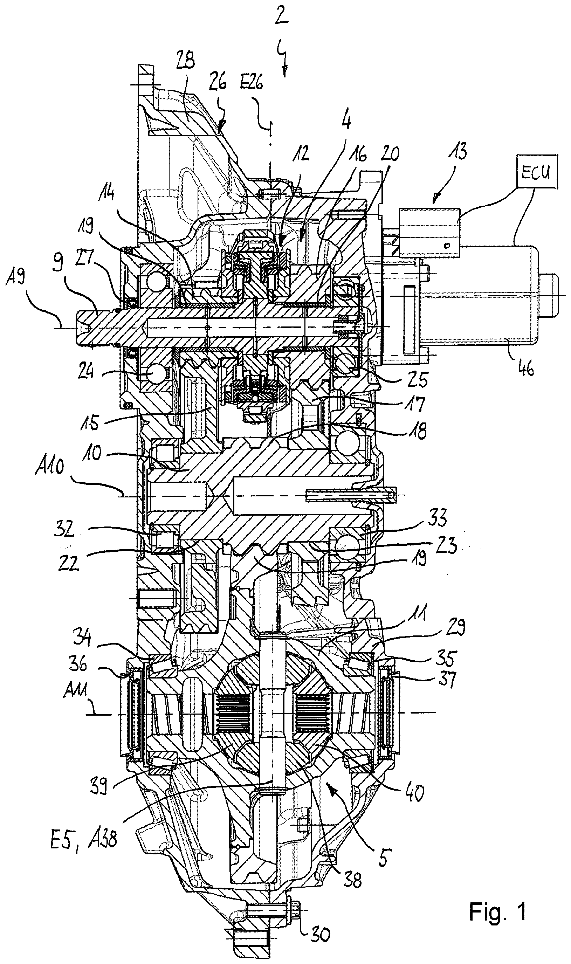

Die Figuren 1 bis 7 werden im Folgenden gemeinsam beschrieben. Figur 1 zeigt eine erfindungsgemäße Aktuierungsanordnung 1 als Teil einer erfindungsgemäßen Antriebsanordnung 2. Die Antriebsanordnung 2 umfasst einen Elektromotor 3, ein Schaltgetriebe 4 und ein Differentialgetriebe 5. Elektromotor 3, Schaltgetriebe 4 und Differentialgetriebe 5 bilden gemeinsam einen Elektroantrieb zum Antreiben einer Antriebsachse eines Kraftfahrzeugs. Dabei kann der Elektroantrieb als alleinige Antriebsquelle oder mit einer zusätzlichen Antriebsquelle verwendet werden.

Der Elektromotor 3 umfasst einen Stator 6 und einen hierzu drehbaren Rotor 7, der bei Bestromen des Elektromotors eine Motorwelle 8 drehend antreibt. Die Drehbewegung der Motorwelle 8 wird auf die Antriebswelle 9 des Schaltgetriebes 4 übertragen. Der Elektromotor 3 wird von einer Batterie mit elektrischem Strom versorgt, wobei die Batterie im Generatorbetrieb auch vom Elektromotor aufgeladen werden kann.

Das Schaltgetriebe 4 umfasst zwei Schaltstufen, so dass eingeleitetes Drehmoment von der Antriebswelle 9 auf die Zwischenwelle 10 mit zwei unterschiedlichen Übersetzungsverhältnissen i1, i2 übertragen werden kann. Die Zwischenwelle 10 ist mit dem Differentialträger 11 des Differentialgetriebes 5 antriebsverbunden. Mittels des Differentialgetriebes 5 wird das eingeleitete Drehmoment auf zwei Seitenwellen 81, 82 zum Antreiben der Fahrzeugräder aufgeteilt. Es ist eine Kupplungseinheit 12 vorgesehen, die von einem Aktuator 13 betätigbar ist, um das Schaltgetriebe 4 wahlweise in Neutralstellung, den ersten Gang oder den zweiten Gang zu schalten. Auf den Aufbau und die Funktionsweise der Kupplungseinheit 12, die auch als Schalteinheit bezeichnet werden kann, wird weiter unten noch näher eingegangen .

Das Schaltgetriebe 4 ist als Untersetzungsgetriebe gestaltet, so dass eine vom Elektromotor 3 eingeleitete Drehbewegung vom Schnellen ins Langsame übersetzt wird. Die erste Übersetzungsstufe umfasst ein auf der Antriebswelle 9 drehbar gelagertes erstes Antriebsrad 14 und ein drehfest mit der Zwischenwelle 10 verbundenes erstes Zwischenrad 15, die miteinander in Verzahnungseingriff sind. Erstes Antriebsrad 14 und erstes Zwischenrad 15 bilden einen ersten Rädersatz mit einem ersten Übersetzungsverhältnis i1, das vorzugsweise zwischen 3,0 und 4,0 liegt. Die zweite Übersetzungsstufe umfasst ein auf der Antriebswelle 9 drehbar gelagertes zweites Antriebsrad 16 und ein drehfest mit der Zwischenwelle 10 verbundenes zweites Zwischenrad 17, die miteinander in Verzahnungseingriff sind. Zweites Antriebsrad 16 und zweites Zwischenrad 17 bilden einen zweiten Rädersatz mit einem zweiten Übersetzungsverhältnis i2, das vorzugsweise zwischen 1,3 und 2,3 liegt. Eine dritte Übersetzungsstufe umfasst das mit der Zwischenwelle 10 drehfest verbundene Abtriebsrad 18 und das hiermit kämmende fest mit dem Differentialträger 11 verbundene Ringrad 19. Das Abtriebrad 18 der Zwischenwelle 11 und das Ringrad 19 bilden dabei einen dritten Rädersatz mit einem dritten Übersetzungsverhältnis i3, das vorzugsweise zwischen 2,4 und 3,4 liegt.

Die Antriebswelle 9 ist mittels erster Lagermittel 24, 25 in einem Gehäuse 26 der Antriebsanordnung 2 um eine erste Drehachse A9 drehbar gelagert. Der an der Eingangsseite der Antriebswelle 9 zwischen Welle und Gehäuse 26 gebildete Ringraum ist mittels eines Radialwellendichtrings 27 abgedichtet. Die Antriebsräder 14, 16 sind über jeweilige Lagermittel 20, 21 auf der Antriebswelle 9 drehbar gelagert. Die Zwischenwelle 10 ist mittels zweiter Lagermittel 32, 33 im Gehäuse 26 um eine zweite Drehachse A10 drehbar gelagert. Die Lagermittel 32, 33 sind als Wälzlager gestaltet, die an Enden der Zwischenwelle 10 vorgesehen sind. Das Abtriebsrad 18 ist einteilig mit der Zwischenwelle 10 axial zwischen dem ersten und zweiten Zwischenrad 15, 17 angeordnet. Die Zwischenräder 15, 17 sind über Wellenverzahnungen 22, 23 (Splines) mit der Zwischenwelle 10 drehfest verbunden, insbesondere mit Übermaßpassung. Die Antriebswelle 9, die Zwischenwelle 10 und die Drehachse A11 des Differentialträgers 11 verlaufen parallel zueinander. Das Abriebsrad 18 der Zwischenwelle 10 hat zumindest teilweise eine axiale Überdeckung mit der Differentialmittelebene E5. Das Gehäuse 26 hat ein erstes Gehäuseteil 28 und ein zweites Gehäuseteil 29, die in einer Fügeebene E26 mittels geeigneter Verbindungsmittel 30 wie Schraubverbindungen miteinander verbunden sind. Ferner liegt die Fügeebene E26 des Gehäuses 26 in axialer Überdeckung mit dem Zwischenwellen-Abtriebsrad 18, respektive der Kupplungseinheit 12.

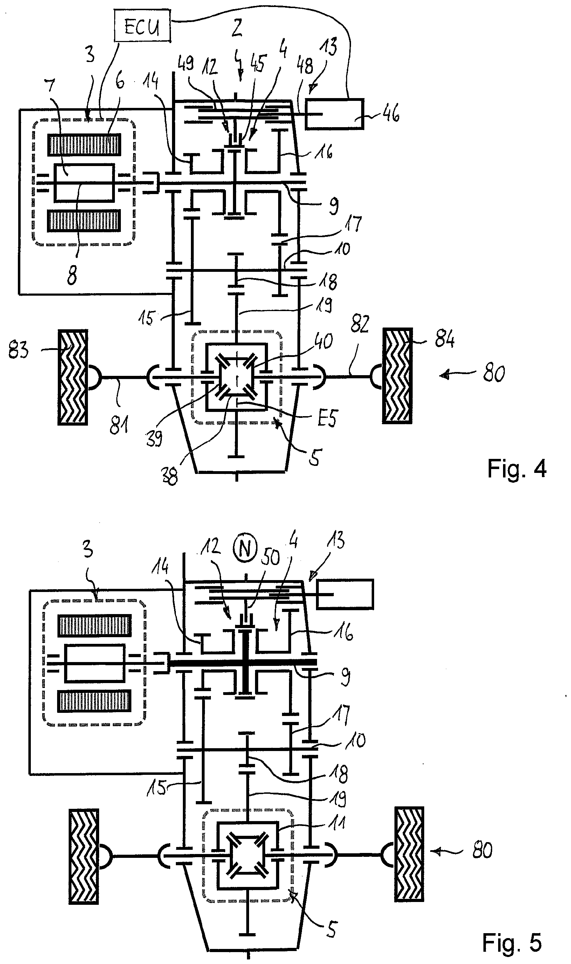

Das Abtriebsrad 18 der Zwischenwelle 10 kämmt mit dem Ringrad 19 des Differentialträgers 11, um Drehmoment in das Differential einzuleiten. Der Differentialträger 11, der auch als Differentialkorb bezeichnet wird, ist in dem Gehäuse 26 mittels Lagermitteln 34, 35 um die Drehachse A11 drehbar gelagert und mittels Radialwellendichtringen 36, 37 abgedichtet. Das Differential 5 umfasst ferner mehrere Differentialräder 38, die in dem Differentialträger 11 auf einer zur Drehachse A11 senkrechten Achse A38 drehbar gelagert sind, sowie zwei Seitenwellenräder 39, 40, die jeweils koaxial zur Drehachse A11 drehbar angeordnet und mit den Differentialrädern 38 in Verzahnungseingriff sind. Zwei einander gegenüberliegende Differentialräder 38 sind auf einem Zapfen 41 drehbar gelagert, der in Bohrungen des Differentialträgers 11 eingesteckt und axial fixiert ist. Die Achse A38 der Differentialräder 38 definiert eine Differentialmittelebene E5. Vom Ringrad 19 in den Differentialträger 11 eingeleitetes Drehmoment wird über die Differentialräder 38 auf die beiden Seitenwellenräder 39, 40 übertragen, zwischen denen eine ausgleichende Wirkung besteht. Die Seitenwellenräder 39, 40 sind zur Übertragung eines Drehmoments mit den zugehörigen Seitenwellen 81, 82 verbunden, die das eingeleitete Drehmoment auf die Räder 83, 84 des Kraftfahrzeugs übertragen, wie in Figuren 4 bis 7 gezeigt. Die beiden Seitenwellenräder 39, 40 haben jeweils eine Innenverzahnung, in die eine zugehörige Seitenwelle zur Übertragung eines Drehmoments mit einer entsprechenden Außenverzahnung drehfest eingreifen kann.

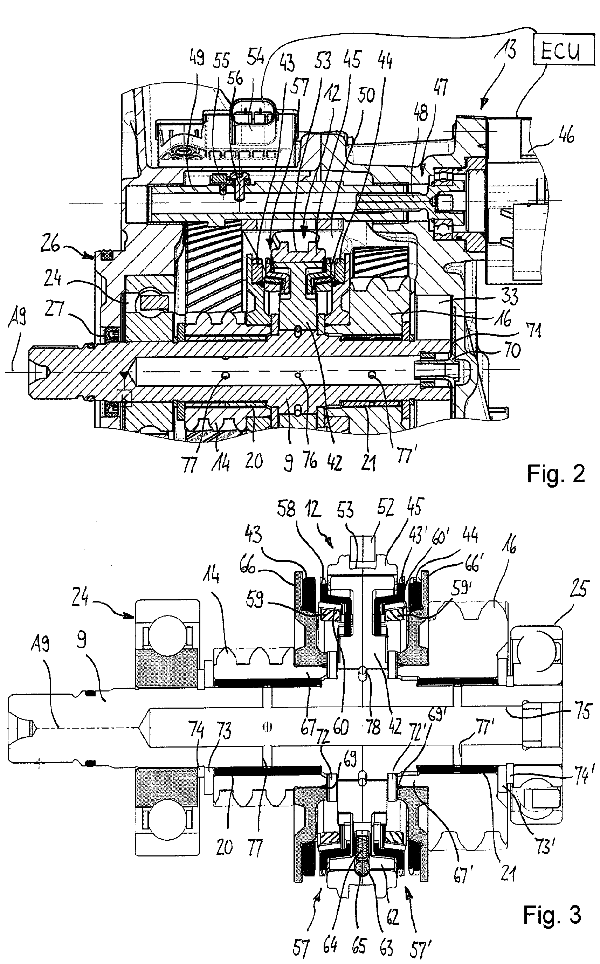

Die Kupplungseinheit 12, welche im Detail in den Figuren 2 und 3 dargestellt ist, ist axial zwischen dem ersten Antriebsrad 14 und dem zweiten Antriebsrad 16 angeordnet. Die Kupplungseinheit umfasst ein Eingangsteil 42, das mit der Antriebswelle 9 drehfest verbunden und axial fixiert ist, ein erstes Ausgangsteil 43, das mit dem ersten Antriebsrad 14 fest verbunden ist, und ein zweites Ausgangsteil 44, das mit dem zweiten Antriebsrad 16 fest verbunden ist. Es ist ein Koppelelement 45 vorgesehen, welches das Eingangsteil 42 optional mit dem ersten Ausgangsteil 43 oder dem zweiten Ausgangsteil 44 zur Übertragung eines Drehmoments verbinden kann. Das Koppelelement 45 ist in Form einer Schiebemuffe gestaltet, die auf dem Eingangsteil 44 drehfest und axial verschiebbar gehalten ist.

Die Betätigung der Schiebemuffe 45 erfolgt über die erfindungsgemäße Aktuierungsanordnung 1. Die Aktuierungsanordnung 1 weist einen Antrieb 46 in Form eines Elektromotors und einen Rotations-Translations-Wandler 47 auf, der eine Drehbewegung in eine Linearbewegung umwandelt. Die Wandlereinheit 47 ist insbesondere in Form einer Gewindespindel gestaltet und umfasst ein drehend antreibbares Spindelteil 48 und ein hiermit schraubverbundenes Verschiebeteil 49, das bei Drehung des Spindelteils axial bewegt wird. An dem Verschiebeteil 49, das in Form eines Wellenrohres gestaltet ist, ist ein Betätigungselement 50 in Form einer Schaltgabel befestigt. Die Schaltgabel 50 greift mit zwei Gleitsteinen 52 in eine Ringnut 53 der Schiebemuffe 45 ein. Die Aktuierungsanordnung 1 ist von einer elektronischen Regeleinheit ECU ansteuerbar und wird von dieser bedarfsweise, in Abhängigkeit von aktuellen oder gewünschten Fahrzuständen des Kraftfahrzeugs angesteuert.

Für eine genaue Ansteuerung beziehungsweise Positionierung der Schaltmuffe 45 sind erste Sensormittel 54 vorgesehen, die ein die axiale Position der Schaltgabel 50 beziehungsweise der Schaltmuffe 45 repräsentierendes Signal erfassen und an die Regeleinheit weitergeben können. Die ersten Sensormittel 54 sind als berührungsloser Wegsensor gestaltet, insbesondere als Magnetfeldsensor oder induktiver Sensor. Die Verwendung eines berührungslosen Sensors hat den Vorteil geringer Leistungsverluste und eines geringen Verschleißes. Der berührungslose Sensor wirkt mit einem Signalgeber 55 zusammen. Dabei erfasst der Sensor 54 die axiale Position des Signalgebers 55 und gibt ein entsprechendes Sensorsignal an die elektronische Regeleinheit weiter. Der Signalgeber 55 ist mit der Spindelhülse 49 verbunden, so dass er bei Betätigung des Aktuators 13 gemeinsam mit dieser axial bewegt wird. Der Signalgeber 55 ist in einem Trägerelement aufgenommen, das mit der Spindelhülse mittels einer Schraubverbindung 56 befestigt ist. Alternativ zum Wegsensor kann zum Ermitteln der Position der Schaltgabel auch ein Drehwinkelsensor verwendet werden, der die Drehbewegung des Aktuatorantriebs 46 sensiert, aus der dann die Position der Schaltgabel errechnet wird.

Zusätzlich werden zur Steuerung der Aktuierungsanordnung 1 die von zweiten Sensormitteln erfassten Daten verwendet. Diese zweiten Sensormittel erfassen insbesondere ein die Kraft zum axialen Bewegen der Schiebemuffe 45, respektive der Spindelhülse 49, repräsentierende Größe. Beispielsweise kann ein Stromsignal zur Ansteuerung des Aktuators erfasst werden, welches repräsentativ ist für die aufzuwendende Kraft, um das Spindelteil 48 anzutreiben. Die zweiten Sensormittel können auch als Kraftsensor bezeichnet werden.

Die Kupplungseinheit 12 umfasst ferner je Ausgangsteil 43, 44 einen Synchronisiermechanismus 57, 57' mit dem vor dem Schalten eine Drehzahlangleichung der miteinander zu verbindenden Bauteile vorgenommen wird, das heißt zwischen dem Eingangsteil 42 und dem jeweiligen Ausgangsteil 43, 44. Da die Synchronisiermechanismen 57, 57' gleich aufgebaut sind, wird stellvertretend nur einer beschrieben. Der Synchronisiermechanismus 57 weist einen Außenring 58 mit einem Innenkonus, einen Innenring 59 mit einem Außenkonus und einen dazwischen angeordneten Zwischenring 60 auf. Der Außenring 58 ist mit dem Eingangsteil 42 derart drehfest verbunden, dass beide gemeinsam um die Drehachse A9 rotieren, wobei eine begrenzte Relativdrehung zwischen Eingangsteil 42 und Außenring 58 möglich ist. Der Zwischenring 60 ist mit dem Ausgangsteil 43 drehfest verbunden. Der Innenring 59 ist wieder mit dem Eingangsteil 42 drehfest verbunden. Durch diese Ausgestaltung wird sichergestellt, dass ein Ineingriffbringen der Schiebemuffe 45 und des jeweiligen Ausgangsteils 43, 44 erst möglich ist, wenn beide gemeinsam mit der selben Drehzahl rotieren, das heißt synchronisiert sind. Das Synchronisieren wird mittels mehrerer umfangsverteilter Druckstücke 62 erreicht, die mit dem Eingangsteil 42 derart drehfest verbunden sind, dass sie gemeinsam mit diesem rotieren. Durch axiales Bewegen der Schiebemuffe 45 werden die Druckstücke 62 gegen den Außenring 58 beaufschlagt, so dass an den Flächenpaarungen zwischen Außenring 58 und Zwischenring 60 einerseits, und Zwischenring 60 und Innenring 59 andererseits, Reibschluss entsteht. Dieser Reibschluss führt zu einer Drehzahlangleichung zwischen Eingangsteil 42 und jeweiligem Ausgangsteil 43, 44. Drehen die zu verbindenden Teile synchron, kann die Schiebemuffe 45 vollständig in die Eingriffsposition verschoben werden, so dass Eingangsteil 42 und das jeweilige Ausgangsteil 43, 44 zur Übertragung eines Drehmoments miteinander verbunden sind. Die Druckstücke 62 sind jeweils über eine Kugel 63, die von einer Feder 64 nach radial außen vorgespannt ist, mit der Schiebemuffe 45 verbunden. Dabei greift die Kugel 63 jeweils in eine innere Nut 65 der Schiebemuffe 45 formschlüssig ein. Übersteigt die axiale Betätigungskraft der Schiebemuffe 45 die Haltekraft der Kugel 63, wird diese entgegen der Vorspannkraft der Feder 64 nach radial innen bewegt, so dass die Schiebemuffe weiter in Richtung des jeweiligen Ausgangsteils 43, 44 verschoben werden kann.

Das erste Ausgangsteil 43 ist mit einem ersten Ring 66 fest verbunden, insbesondere verschweißt. Hierfür hat der erste Ring 66 eine ringförmige Ausnehmung, in der das Ausgangsteil 43 einsitzt. Radial innen hat der erste Ring 66 einen Nabenabschnitt, der auf einem Hülsenansatz 67 des ersten Antriebsrads 14 aufsitzt und mit diesem verschweißt ist (69). Erstes Ausgangsteil 43, erster Ring 66 und erstes Antriebsrad 14 bilden gemeinsam ein erstes Zahnrad, das mittels der Lagermittel 19 auf der Antriebswelle 9 drehbar gelagert. Die Lagermittel 20, 21 sind als Gleitlager gestaltet und umfassen zwei Lagerbuchsen, wobei auch andere geeignete Lagermittel denkbar wären. In axiale Richtung ist das erste Zahnrad zwischen einer ersten Scheibe 72 und einer zweiten Scheibe 73 fixiert. Die erste Scheibe 72 sitzt auf einer Sitzfläche der Antriebswelle 9 mit Übermaßpassung und ist gegen eine Schulter der Antriebswelle axial abgestützt. Die zweite Scheibe 73 ist über einen Sicherungsring 74 gegenüber der Antriebswelle 9 in entgegengesetzter axialer Richtung abgestützt. Das zweite Ausgangsteil 44, der zweite Ring 66' und das zweite Antriebsrad 16 bilden entsprechend ein zweites Zahnrad, welches analog zum ersten Zahnrad gestaltet ist. Insofern wird hinsichtlich aller Gemeinsamkeiten auf die Beschreibung zum ersten Zahnrad Bezug genommen, wobei einander entsprechende Einzelheiten mit denselben Bezugszeichen mit Indizes versehen sind.

Um eine gute Schmiermittelversorgung und lange Lebensdauer der drehenden Bauteile zu erreichen, hat die Antriebswelle 9 eine Längsbohrung 75 und je Sitzfläche für die hierauf angeordneten Räder 42, 14, 16 mehrere über den Umfang verteilte Querbohrungen 76, 77, 77'. Das Eingangsteil 42 ist mit Presspassung mit der Antriebswelle 9 drehfest verbunden. Zur Axialsicherung ist ein Sicherungsring 78 vorgesehen, der in entsprechende Ringnuten der Antriebswelle bzw. des Eingangsteils eingreift.

Im Folgenden wird unter besonderer Bezugnahme auf die Figuren 4 bis 7 die Schaltung der erfindungsgemäßen Antriebsanordnung 2 erläutert. Figur 4 zeigt schematisch die Antriebsanordnung 2 mit Elektromotor 3 zum Antreiben der Fahrzeugachse 80. Es sind die Seitenwellen 81, 82 und die hiermit verbundenen Räder 83, 84 der Fahrzeugachse 80 erkennbar.

Wie oben erläutert, weist die Antriebsanordnung 2 eine Zweigangschaltung auf, welche durch einen ersten Leistungspfad und einen funktional parallelen zweiten Leistungspfad gebildet wird. Durch entsprechendes Ansteuern der Kupplungseinheit 12 kann Drehmoment wahlweise über den ersten Leistungspfad oder alternativ über den zweiten Leistungspfad vom Elektromotor 3 auf das Differential 5 beziehungsweise die Antriebsachse 80 übertragen werden.

In Figur 5 ist die Kupplungseinheit 12 in Neutralposition (N) gezeigt, welche auch als Leerlaufposition bezeichnet werden kann. Die mit dem Elektromotor 3 antriebsverbundenen Bauteile sind fett dargestellt. Es ist erkennbar, dass die Schaltmuffe 45 in der Neutralposition in einer zentralen Stellung ist. In dieser Position sind der Elektromotor 3 und das Differential 5 voneinander entkoppelt, so dass keine Drehmomentübertragung zwischen den Seitenwellen 81, 82 und dem Elektromotor 3 erfolgen kann. Dies ist beispielsweise erforderlich, wenn das Kraftfahrzeug im Fall einer Panne abgeschleppt werden muss.

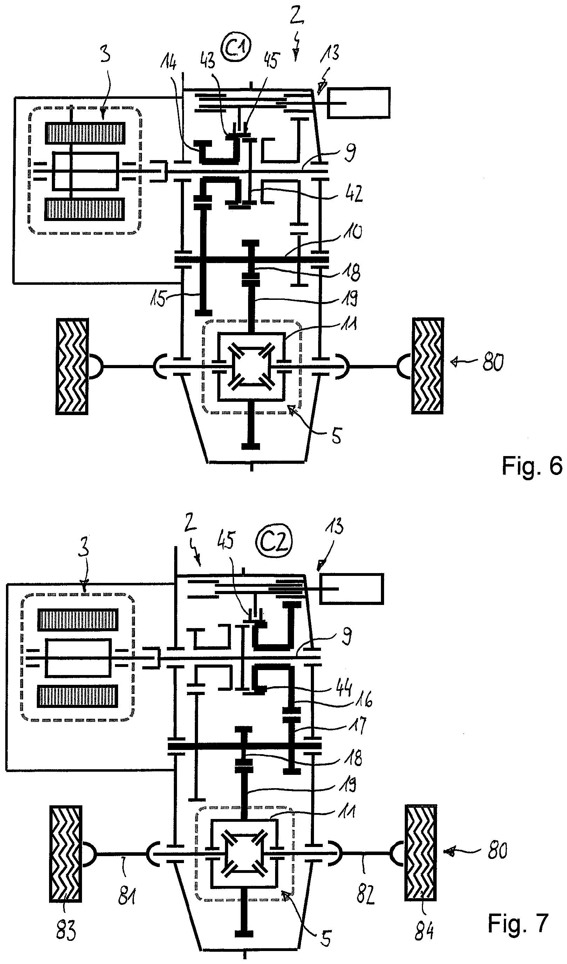

In der ersten Schaltposition (C1), welche in Figur 6 dargestellt ist, ist die Schiebemuffe 45 mit dem ersten Ausgangsteil 43, respektive ersten Antriebsrad 14 drehfest verbunden. Es wird Drehmoment vom Elektromotor 3 auf das Differential 5 über den ersten Leistungspfad übertragen, der fett dargestellt ist. Der erste Leistungspfad umfasst die vom Elektromotor 3 angetriebene Antriebswelle 9, das Eingangsteil 42, das erste Antriebsrad 14, das erste Zwischenrad 15, die Zwischenwelle 10 und das Abtriebsrad 18, das mit dem Ringrad 19 zum Antreiben des Differentials 5 in Verzahnungseingriff ist.

In der zweiten Schaltposition (C2), welche in Figur 7 dargestellt ist, ist die Schiebemuffe 45 mit dem zweiten Ausgangsteil 44, respektive zweiten Antriebsrad 16 gekoppelt, so dass Drehmoment über den zweiten Leistungspfad übertragen wird, der wieder fett dargestellt ist. Der zweite Leistungspfad umfasst die Antriebswelle 9, das Eingangsteil 42, das zweite Antriebsrad 16, das zweite Zwischenrad 17, die Zwischenwelle 10 und das Abtriebsrad 18, das mit dem Ringrad 19 kämmt.

Insgesamt hat die Antriebsanordnung 2 drei Zahnradpaarungen: das erste Antriebsrad 14 und das erste Zwischenrad 15 (erste Zahnradpaarung), das zweite Antriebsrad 16 und das zweite Zwischenrad 17 (zweite Zahnradpaarung), und das Abtriebsrad 18 und das Ringrad 19 (dritte Zahnradpaarung). Je nach Schaltstellung der Kupplungseinheit 12 erfolgt der Antrieb über die erste oder die zweite Zahnradpaarung, so dass sich zwei Gangschaltstufen ergeben.

Die Steuerung des Elektroantriebs erfolgt vorzugsweise unter Berücksichtigung von unter anderem einer die Drehzahl der Antriebswelle 9 repräsentierenden Größe und einer die Drehzahl der Zwischenwelle 10 repräsentierenden Größe als Eingangsgrößen. Dies können beispielsweise die Motordrehzahl des Elektromotors 3 und die Raddrehzahl der Fahrzeugräder 83, 84 sein, aus denen sich die Drehzahlen der Antriebswelle 9 und der Zwischenwelle 10 ermitteln lassen. Die Berechnung der Wellendrehzahlen ist wichtig, um mittels des Elektromotors 3 eine Angleichung der Drehzahl der Antriebswelle an die der Zwischenwelle herzustellen. Als weitere Eingangsgröße erhält die elektronische Regeleinheit zur Steuerung des Elektroantriebs Steuersignale von der Aktuierungsanordnung 1, beispielsweise welche Schaltposition eingelegt ist. Dies ist beispielsweise von Wichtigkeit, damit der Elektromotor 3 erst Drehmoment in die Antriebsanordnung 2 einleitet, wenn die erste bzw. zweite Gangschaltstufe sicher eingelegt ist.

Ein erfindungsgemäßes Verfahren zum Steuern der Aktuierungsanordnung 1 kann folgende Schritte umfassen: Sensieren eines die Position des Betätigungselements 50 repräsentierenden Positionssignals P; Sensieren eines die Betätigungskraft zum Verschieben des Betätigungselements 50 repräsentierenden Kraftsignals F; und Steuern des Aktuatorantriebs 46 mittels der elektronischen Regeleinheit in Abhängigkeit vom Positionssignal P und vom Kraftsignal F. Durch die steuerungstechnische Verknüpfung von Positions- und Kraftsignalen wird eine Kalibrierung der Aktuierungsanordnung ermöglicht, so dass bei Betrieb auftretende Lage- und Toleranzänderungen für die Steuerung berücksichtigt werden können. Mittels des Positionssensors, der als Weg- oder Drehwinkelsensor gestaltet sein kann, kann die Position der Schaltmuffe 45 ermittelt werden. Mittels des Kraftsensors können alle bei Betrieb auftretenden Änderungen der Axialkraft registriert und einer jeweils zugehörigen Position der Schaltmuffe 45 zugeordnet werden.

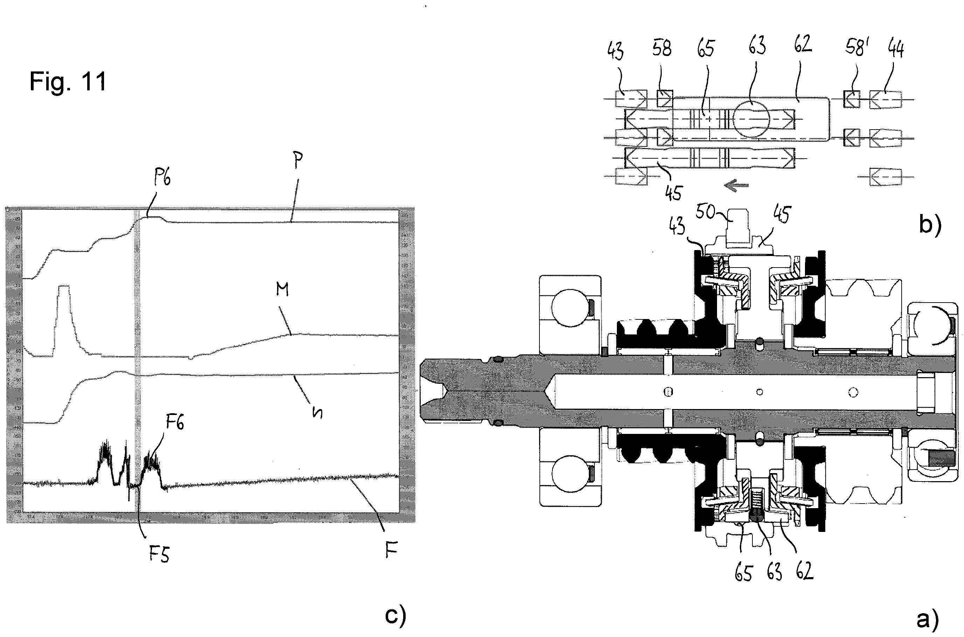

Um die Anordnung zu kalibrieren, wird bei einem ersten Kupplungsvorgang eine Endposition der Schaltmuffe 45 angefahren und durch einen sprunghaften Anstieg des Kraftsignals sensiert. Dieser ist in Figur 11c) als Peak F6 erkennbar. Dabei repräsentiert die Endposition einen Endanschlag der Kupplungseinheit 12 in der ersten bzw. zweiten Kuppelposition. Gleichzeitig wird ein zugehöriger vom Wegsensor erfasster Endpositionswert P6 gespeichert. Bei einem späteren Kupplungsvorgang kann der hinterlegte Endpositionswert beim Ansteuern des Aktuatorantriebs 46 derart berücksichtigt werden, dass das Betätigungselement 50 vor Erreichen der Endposition abgebremst wird. So wird ein hoher Schaltkomfort erreicht.

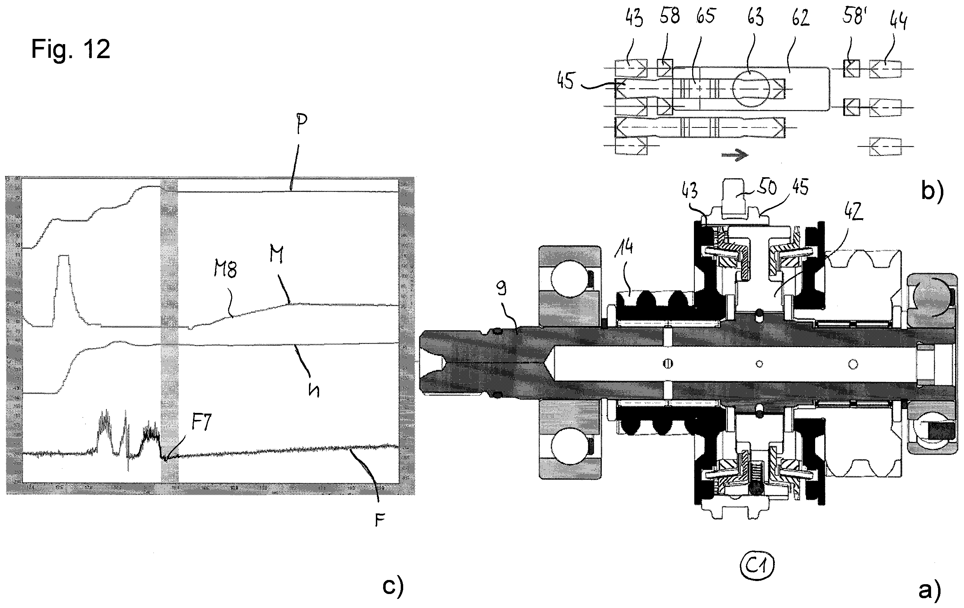

Nach Erreichen der Endposition P6 wird das Betätigungselement 50 um einen definierten Weg in eine von der Endposition axial beabstandeten Kuppelposition bewegt. Diese Kuppelposition ist in Figur 12 gezeigt, wobei das geringfügige Zurückfahren durch einen Pfeil dargestellt ist. Durch das Zurückfahren werden Reibungskräfte im eingekuppelten Zustand reduziert, da in der Aktuierungsanordnung bzw. in der Kupplung Axialspiel eingestellt wird. Der axiale Abstand zwischen der Endposition und der Kuppelposition bzw. der Weg, um den das Betätigungselement wieder zurückgefahren wird, kann beispielsweise zwischen Null und 1,0 mm betragen. Bei einem späteren Kupplungsvorgang kann der Aktuatorantrieb 46 derart angesteuert werden, dass das Betätigungselement 50 direkt in die Kuppelposition bewegt wird, das heißt vor Erreichen der Endposition in der Kuppelposition gestoppt wird.

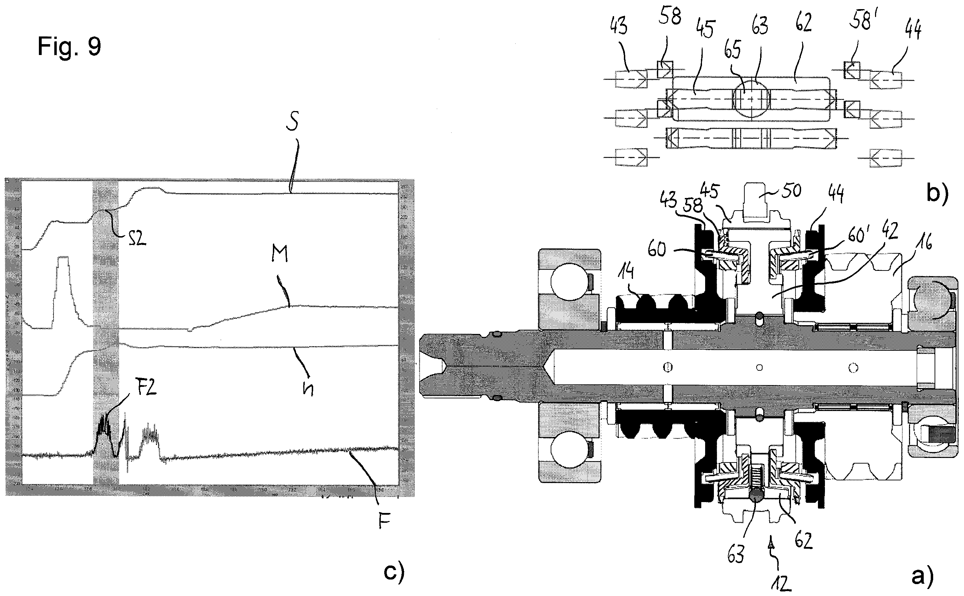

Nach einer weiteren Möglichkeit, die sich aufgrund der Kalibrierung ergibt, kann der Antrieb 46 beim Kupplungsvorgang derart angesteuert werden, dass die Vorschubgeschwindigkeit des Betätigungselements 50 vor Erreichen der Synchronisierposition, welche in Figur 9 gezeigt ist, reduziert wird.

Wenn die relative Drehzahldifferenz zwischen Kupplungseingangsteil und Kupplungsausgangsteil nach einer vorgegebenen Zeitdauer noch nicht unter einen vorbestimmten Differenzdrehzahlwert gefallen ist, wird der Schalt- bzw. Kupplungsvorgang abgebrochen und die Schiebemuffe wieder in Neutralposition gefahren.

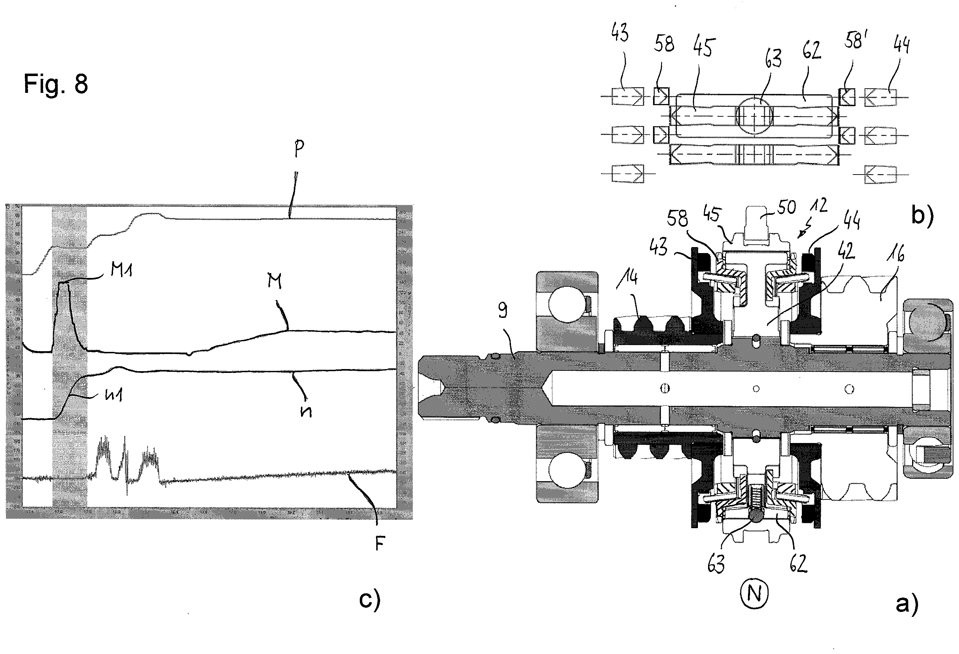

Nachstehend wird anhand der Zeichnungsfiguren 8 bis 12 ein Kupplungs- bzw. Schaltprozess von der Neutralstellung (N) in die erste Schaltposition (C1) beschrieben. In den Figuren 8 bis 12 zeigt die Einzelheit a) jeweils die Kupplungseinheit 12, die Einzelheit b) einen Teil der Kupplung als Abwicklung und c) das zugehörige Kennlinien-Diagramm. In dem Kennlinien-Diagramm zeigt jeweils die obere Linie das Positionssignal (P) der ersten Sensormittel 54, die zweite Linie das Drehmoment M des Elektromotors 3 zum Antreiben der Fahrzeugantriebsachse, die dritte Linie die Drehzahl n des Elektromotors 3 und die untere Linie die an dem Betätigungselement 50 wirksamen Kräfte F. Die in den Figuren gezeigten Graphen wurden experimentell ermittelt; das Grundprinzip gilt jedoch in Realität gleichermaßen. Es sind zur Vereinfachung nur ein Teil der Bezugszeichen eingezeichnet.

Die Figuren 8a) bis 8c) zeigen die Neutralposition (N) der Anordnung. Es ist kein Gang geschaltet. Zum Angleichen der Drehzahlen zwischen Eingangsteil 42 und Ausgangsteil 43 wird das Motordrehmoment M bzw. die Motordrehzahl n des Elektromotors 3 erhöht. Dieser Bereich ist in dem Diagramm grau schattiert, wobei der erhöhte Wert für das Motordrehmoment mit M1 und der für die Motordrehzahl mit n1 eingezeichnet ist. Im weiteren Verlauf wird das Koppelelement 45 vom Betätigungselement 50, das vom Aktuatorantrieb 46 angetrieben wird, in Richtung Kuppelposition (C1) gefahren. Dabei legen sich die Gleitsteine an die Anlagefläche des als Schiebemuffe gestalteten Koppelelements 45 an und verschieben dieses in Richtung Soll-Gang.

In den Figuren 9a) bis 9c) ist die Vorsynchronisierung gezeigt. Die Druckstücke 62 beaufschlagen den Außensynchronring 58 gegen die Konusfläche des Zwischenrings 60, der auch als Reibring bezeichnet werden kann. Infolge der Drehzahldifferenz zwischen der Schiebemuffe 45 und dem Ausgangsteil 43 wird der Außensynchronring 58 verdreht, was in Figur 9b) gut erkennbar ist. Die Zähne der Schiebemuffe 45 sind gegenüber den Zähnen des Außensynchronrings 58 in Umfangsrichtung leicht versetzt, so dass ein Durchschalten der Schiebemuffe 45 nicht möglich ist, solange eine Drehzahldifferenz vorliegt. Der beschriebene Schaltzustand ist im Diagramm grau schattiert. Es ist der erhöhte Wert für die an der Schaltklaue wirksamen Kräfte F erkennbar, welche mit F2 markiert sind. Das zugehörige Sensorsignal ist mit S2 einzeichnet.

Im weiteren Verlauf der Synchronisierung wird die Schiebemuffe 45 weiterbewegt, wodurch sie die stirnseitigen Schrägen der Schiebemuffe und des Außensynchronrings 58 berühren. Hiermit beginnt die Hauptsynchronisierung, welche nicht gesondert dargestellt ist. Im Rahmen der Hauptsynchronisierung wird die Schaltkraft arbeitsteilig über die Druckstücke 62 und über die Schiebemuffe 45 in den Außensynchronring 58 eingeleitet. Während der sogenannten Rutschphase lässt sich die Schiebemuffe nicht durchschalten.

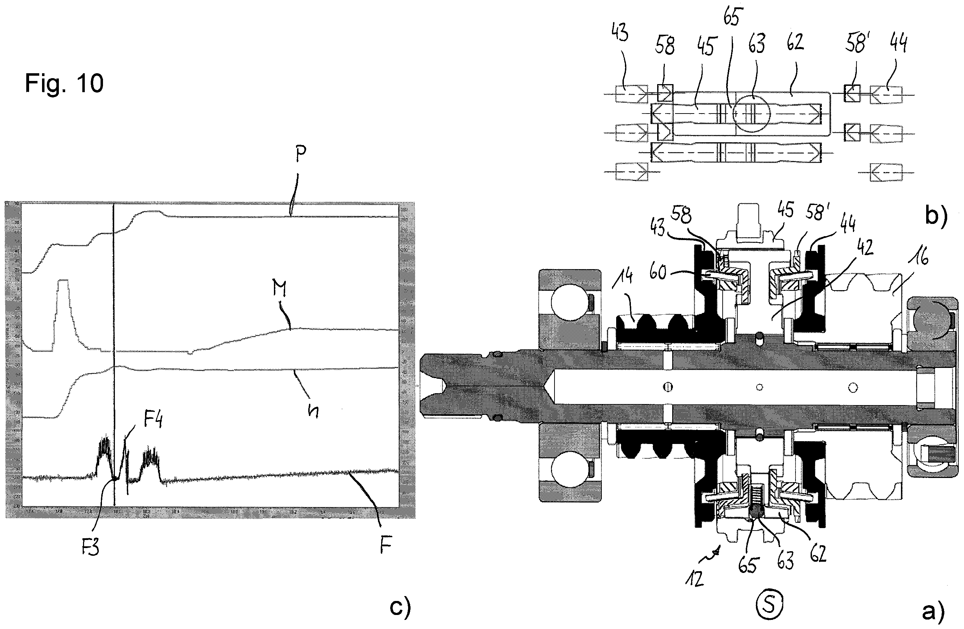

Mit Erreichen des Gleichlaufs (S), welcher in Figur 10 gezeigt ist, fällt das Reibmoment zwischen den Synchronringen gegen Null. Dies hat zur Folge, dass die an der Schiebemuffe 45 wirksamen Axialkräfte entsprechend reduziert werden, was in Figur 10c) mit F3 markiert ist. Das öffnende Verzahnungsmoment bewirkt über die Zahnschrägen ein Rückdrehen des Außensynchronrings 58 gegenüber der Schiebemuffe 45, was in Figur 10b) erkennbar ist. Die Schiebemuffe 45 kann in dieser Position weiter in Richtung Soll-Gang bzw. Kuppelposition verschoben werden. Dabei werden die federbeaufschlagten Kugeln 63 der Druckstücke 62 von der Schiebemuffe 45 überschoben womit die Synchronisierung beendet ist.

Im nachfolgenden Verfahrensschritt des Eindockens der Verzahnung der Schiebemuffe 45 und der Verzahnung des Ausgangsrads 43 treffen die stirnseitigen Verzahnungsschrägen der Schiebemuffe auf die Verzahnungsschrägen des Ausgangsrads 43, was zu einem erneuten Kraftanstieg führt, welcher in Figur 10b) erkennbar und mit F4 markiert ist. Die Schiebemuffe 45 verdreht das Ausgangsrad 43 relativ zum Außensynchronring 58. Die Schaltung ist frei, was zu einem Abfallen der Axialkraft führt (F5) und der Formschluss zwischen der Schiebemuffenverzahnung und der Ausgangsradverzahnung kann hergestellt werden. Figur 11 zeigt diesen Verfahrensschritt, in dem die Schiebemuffe 45 auf das Ausgangsrad 43 aufgeschoben wird. Auf diese Weise wird der Leistungsfluss zwischen dem Eingangsrad 42 bzw. der Antriebswelle 9 und dem Ausgangsrad 43 hergestellt. Die Verschieberichtung ist durch einen Pfeil gekennzeichnet.

Bei weiterem Verschieben der Schiebemuffe 45 wird der Endanschlag erreicht, was durch sich durch einen erneuten Kraftanstieg der auf die Schiebemuffe 45 wirksamen Kräfte F bemerkbar macht und von den Kraft-Sensormitteln erfasst wird. Der Kraftanstieg ist in Figur 11c) mit F6 markiert. Nach Erreichen des Endanschlags wird die Schaltgabel 50 mit dem Gleitstein wieder geringfügig in die Kuppelposition zurückbewegt, die auch als Gangposition bezeichnet werden kann. Das Zurückbewegen, was in Figur 12 durch einen Pfeil nach rechts dargestellt ist, erfolgt beispielsweise über eine Strecke von 0,5 mm bis 1,0 mm. Die Kräfte F an der Schaltgabel sinken wieder merklich, was in Figur 12c) mit F7 markiert ist.

Mit Erreichen der Kuppelposition C1 ist der Kraftfluss zwischen Eingangsrad 42 über die Schiebemuffe 45 auf das Ausgangsrad 43 bzw. das damit fest verbundene Zahnrad 14 geschlossen. Der E-Motor 3 für den Elektroantrieb kann bestromt werden, was am steigenden Drehmoment M8 erkennbar ist.

### Bezugszeichenliste

- 1: Aktuatoranordnung
- 2: Antriebsanordnung
- 3: Elektromotor
- 4: Schaltgetriebe
- 5: Differentialgetriebe
- 6: Stator
- 7: Rotor
- 8: Motorwelle
- 9: Antriebswelle
- 10: Zwischenwelle
- 11: Differentialträger
- 12: Kupplungseinheit
- 13:
- 14: erstes Antriebsrad
- 15: erstes Zwischenrad
- 16: zweites Antriebsrad
- 17: zweites Zwischenrad
- 18: Abtriebsrad
- 19: Ringrad
- 20: Lagermittel
- 21: Lagermittel
- 22: Wellenverzahnung
- 23: Wellenverzahnung
- 24: Lagermittel
- 25: Lagermittel
- 26: Gehäuse
- 27: Radialwellendichtring
- 28: erstes Gehäuseteil
- 29: zweites Gehäuseteil
- 30: Verbindungsmittel
- 32: Lagermittel
- 33: Lagermittel
- 34: Lagermittel
- 35: Lagermittel
- 36: Radialwellendichtring
- 37: Radialwellendichtring
- 38: Differentialrad
- 39: Seitenwellenrad
- 40: Seitenwellenrad
- 41: Zapfen
- 42: Eingangsteil
- 43: erstes Ausgangsteil
- 44: zweites Ausgangsteil
- 45: Koppelelement
- 46: Aktuatorantrieb
- 47: Wandlereinheit
- 48: Spindel
- 49: Spindelhülse
- 50: Schaltgabel

- 52: Gleitstein
- 53: Ringnut
- 54: Sensor
- 55: Signalgeber
- 56: Schraubverbindung
- 57, 57': Synchronisiermechanismus
- 58, 58': Außenring
- 59, 59': Innenring
- 60, 60': Zwischenring

- 62: Druckstück
- 63: Kugel
- 64: Feder
- 65: Nut
- 66, 66': erster Ring
- 67, 67': Hülsenansatz

- 69, 69': Schweißverbindung
- 70: Zuführelement
- 71: Radialspalt
- 72, 72': erste Scheibe
- 73, 73': zweite Scheibe
- 74, 74': Sicherungsring
- 75: Längsbohrung
- 76: Querbohrung
- 77, 77': Querbohrung
- 78: Sicherungsring

- 80: Fahrzeugachse
- 81: Seitenwelle
- 82: Seitenwelle
- 83: Rad
- 84: Rad

- A: Drehachse
- C1, C2: Schaltpositionen
- E: Ebene
- F: Kraft
- M: Drehmoment
- N: Neutralposition
- n: Drehzahl
- P: Position
- S: Synchronisierposition

## Patentansprüche

1. Verfahren zum Steuern einer Aktuierungsanordnung für eine Kupplung im Antriebsstrang eines Kraftfahrzeugs, wobei die Aktuierungsanordnung einen Aktuatorantrieb (46) zum Verschieben eines Betätigungselements (50) zum Betätigen der Kupplungseinheit (12) aufweist, wobei das Verfahren die folgenden Schritte aufweist:
Sensieren eines die Position (P) des Betätigungselements (50) repräsentierenden Positionssignals;
Sensieren eines die Betätigungskraft (F) zum Verschieben des Betätigungselements (50) repräsentierenden Kraftsignals;
**gekennzeichnet durch**:
Verknüpfen eines sensierten Positionssignals und eines zugehörigen sensierten Kraftsignals zur Bestimmung einer genauen Position des Betätigungselements;
Steuern des Aktuatorantriebs (46) mittels einer elektronischen Regeleinheit (ECU) in Abhängigkeit vom Positionssignal und vom hiermit verknüpften Kraftsignal.

2. Verfahren nach Anspruch 1, **dadurch gekennzeichnet,**
**dass** bei einem ersten Kupplungsvorgang eine Endposition des Betätigungselements (45), die einen Endanschlag der Kupplungseinheit (12) repräsentiert, durch einen sprunghaften Anstieg des Kraftsignals (F6) sensiert wird und ein zugehöriger Endpositionswert (P6) gespeichert wird, und
**dass** bei zumindest einem späteren Kupplungsvorgang der Endpositionswert von der elektronischen Regeleinheit (ECU) beim Ansteuern des Aktuatorantriebs (46) derart berücksichtigt wird, dass das Betätigungselement (50) vor Erreichen der Endposition abgebremst wird, wobei der Endpositionswert (P6) insbesondere auf Basis eines zum Zeitpunkt des sprunghaften Anstiegs des Kraftsignals (F6) sensierten Positionssignals definiert wird.

3. Verfahren nach Anspruch 2, **dadurch gekennzeichnet,**
**dass** das Betätigungselement (50) nach Erreichen der Endposition um einen definierten Weg in eine von der Endposition axial beabstandeten Kuppelposition (C1, C2) bewegt wird.

4. Verfahren nach einem der Ansprüche 2 oder 3, **dadurch gekennzeichnet,**
**dass** der Aktuatorantrieb (46) bei einem späteren Kupplungsvorgang derart angesteuert wird, dass das Betätigungselement (50) direkt in die Kuppelposition (C1, C2) bewegt wird, das heißt vor Erreichen der Endposition in der Kuppelposition gestoppt wird.

5. Verfahren nach einem der Ansprüche 1 bis 4, **dadurch gekennzeichnet,**
**dass** die Kupplungseinheit (12) einen Synchronisiermechanismus (58, 59, 60; 58', 59', 60') umfasst, welche in einer Synchronisierposition (S) des Betätigungselements (50) eine erste Drehzahl eines Kupplungseingangsteils (42) und eine zweite Drehzahl eines Kupplungsausgangsteils (43, 44) aneinander angleicht,
wobei der Aktuatorantrieb (46) beim Kupplungsvorgang derart angesteuert wird,
**dass** die Vorschubgeschwindigkeit des Betätigungselements (50) vor Erreichen der Synchronisierposition (S) reduziert wird.

6. Verfahren nach Anspruch 5, **dadurch gekennzeichnet,**
**dass** die Vorschubgeschwindigkeit des Betätigungselements (50) wieder erhöht wird, wenn eine relative Drehzahldifferenz zwischen dem Kupplungseingangsteil (42) und dem Kupplungsausgangsteil (43, 44) unter einen vorbestimmten Differenzdrehzahlwert gefallen ist, und/oder
**dass** das Betätigungselement (50) in eine Neutralposition (N) zurückgefahren wird, wenn die relative Drehzahldifferenz nach einer vorgegebenen Zeitdauer noch immer größer ist als der vorbestimmte Differenzdrehzahlwert.

7. Verfahren nach einem der Ansprüche 1 bis 6, **dadurch gekennzeichnet,**
**dass** der Verfahrensschritt des Sensierens des Positionssignals zumindest einen der folgenden Teilschritte umfasst:
Sensieren eines einen Weg des Betätigungselements (50) repräsentierenden Wegsignals und Ermitteln der Position aus dem Wegsignal;
Sensieren eines eine Drehbewegung des Aktuatorantriebs (46) repräsentierenden Drehsignals und Ermitteln der Position aus dem Drehsignal.

8. Verfahren nach einem der Ansprüche 1 bis 7, **dadurch gekennzeichnet,**
**dass** der Aktuatorantrieb (46) zum Bewegen des Betätigungselements (50) ein Elektromotor ist, wobei der Verfahrensschritt des Sensierens des Kraftsignals die folgenden Teilschritte umfasst:
Sensieren der Stromstärke des Elektromotors und Berechnen der Kraft (F) des Betätigungselements (50) aus der Stromstärke des Elektromotors.

9. Antriebsanordnung mit einer Kupplungseinheit im Antriebsstrang eines Kraftfahrzeugs und mit einer Aktuierungsanordnung (1) zum Betätigen der Kupplungseinheit,
wobei die Kupplungseinheit (12) mittels der Aktuierungsanordnung (1) wahlweise in eine Kupplungsposition (C1, C2) überführbar ist, in der Drehmoment zwischen einem Kupplungseingangsteil (42) und einem Kupplungsausgangsteil (43, 44) übertragen wird, und in eine Neutralposition (N), in der das Kupplungseingangsteil (42) und das Kupplungsausgangsteil (43, 44) frei gegeneinander drehbar sind,
wobei die Kupplungseinheit (12) einen Synchronisiermechanismus (58, 59, 60; 58', 59', 60') umfasst, der vor dem Schließen in die Kupplungsposition (C1, C2) eine Drehzahlangleichung zwischen dem Kupplungseingangsteil (42) und dem Kupplungsausgangsteil (43, 44) bewirkt;
wobei die Aktuierungsanordnung
einen Aktuatorantrieb (46) mit einer drehend antreibbaren Welle,
einen Rotations-Translations-Wandler (47), der eine Drehbewegung der Welle in eine translatorische Bewegung eines Betätigungselements (50) umwandelt, erste Sensormittel (54, 55), die ein die translatorische Bewegung des Betätigungselements (50) repräsentierendes Positionssignal sensieren,
zweite Sensormittel, die ein die Kraft des Aktuatorantriebs (46) repräsentierendes Kraftsignal sensieren, und
eine elektronische Regeleinheit (ECU) zur Steuerung des Aktuatorantriebs (46) aufweisen,
**dadurch gekennzeichnet, dass**
die elektronische Regeleinheit (ECU) mit den ersten Sensormitteln (54) und mit den zweiten Sensormitteln verbunden ist, um ein sensiertes Positionssignal und ein sensiertes Kraftsignal zur genauen Positionsbestimmung des Betätigungselements (50) miteinander zu verknüpfen und zur Steuerung des Aktuatorantriebs (46) zu verwenden.

10. Antriebsanordnung nach Anspruch 9, **dadurch gekennzeichnet,**
**dass** die ersten Sensormittel (54, 55) einen Wegsensor umfassen, welcher zumindest mittelbar eine Bewegung des Betätigungselements (50) sensiert, und zwar insbesondere mittels eines an dem Verschiebeteil (49) befestigten Signalgebers (55), dessen Position von den ersten Sensormitteln (54) erfassbar ist.

11. Antriebsanordnung nach Anspruch 9 oder 10, **dadurch gekennzeichnet,**
**dass** die ersten Sensormittel (54, 55) einen Drehwinkelsensor umfassen, welcher zumindest mittelbar eine Drehbewegung des Aktuatorantriebs (46) sensiert, wobei aus der sensierten Drehbewegung des Aktuatorantriebs (46) die Position des Betätigungselements (50) ermittelt wird.

12. Antriebsanordnung nach einem der Ansprüche 9 bis 11, **dadurch gekennzeichnet,**
**dass** die zweiten Sensormittel einen Stromsensor umfassen, der den Strombedarf des Aktuatorantriebs (46) sensiert.

13. Antriebsanordnung nach einem der Ansprüche 9 bis 12, **dadurch gekennzeichnet,**
**dass** der Rotations-Translations-Wandler (47) eine Gewindespindel umfasst mit einem Spindelteil (48), das von der Welle drehend antreibbar ist, und
einem mit dem Spindelteil (48) schraubverbundenen Verschiebeteil (49), das gegenüber einem Gehäuse (26) drehfest und längsverschieblich geführt ist, so dass eine Drehung des Spindelteils (48) eine axiale Verschiebung des Verschiebeteils (49) bewirkt,
wobei das Betätigungselement (50) an dem Verschiebeteil (49) axial fixiert ist.

14. Antriebsanordnung nach einem der Ansprüche 9 bis 13, **dadurch gekennzeichnet,**
**dass** das Kupplungseingangsteil (42) mit einer Antriebswelle (9) drehfest verbunden ist, und
**dass** das Kupplungsausgangsteil (43, 44) mit einem auf der Antriebswelle (9) drehbar gelagerten ersten Antriebsrad (14) drehfest verbunden ist.

15. Antriebsanordnung nach einem der Ansprüche 9 bis 14, **dadurch gekennzeichnet,**
**dass** die Kupplungseinheit (12) zwei Kupplungsausgangsteile (43, 44) aufweist und, dass ein in Form einer Schiebemuffe gestaltetes Koppelelement (45) vorgesehen ist, das gegenüber dem Kupplungseingangsteil (42) drehfest und axial verschiebbar gehalten ist und mit dem Betätigungselement (50) der Aktuierungsanordnung (1) zur Betätigung fest verbunden ist, wobei das Koppelelement (45) überführbar ist:
in eine Neutralposition (N), in der das Kupplungseingangsteil (42), das erste Kupplungsausgangsteil (43) und das zweite Kupplungsausgangsteil (44) frei gegeneinander drehbar sind, oder
in eine erste Kuppelposition (C1), in der das Kupplungseingangsteil (42) mit dem ersten Kupplungsausgangsteil (43) zur Übertragung eines Drehmoments verbunden ist, oder
in eine zweite Kuppelposition (C2), in der das Kupplungseingangsteil (42) mit dem zweiten Kupplungsausgangsteil (44) zur Übertragung eines Drehmoments verbunden ist.

## Claims

1. A process of controlling an actuating assembly for a coupling in the driveline of a motor vehicle, wherein the actuating assembly comprises an actuator drive (46) for moving an actuating element (50) for actuating the coupling unit (12), wherein the process comprises the following steps:
sensing a position signal representing the position (P) of the actuating element (50);
sensing a force signal representing the operating force (F) required for shifting the actuating element (50);
**characterised by**:
linking a sensed position signal and an associated sensed force signal for determining an accurate position of the actuating element;
controlling the actuator drive (46) by an electronic control unit (ECU) depending on the position signal and the force signal linked thereto.

2. Process according to claim 1, **characterised in**
**that** in a first coupling procedure, an end position of the actuating element (45), which represents an end stop of the coupling unit (12), is sensed by an abrupt increase in the force signal (F6) and that an associated end position value (P6) is stored, and
**that** in at least one later coupling procedure, the end position value is taken into account by the electronic control unit (ECU) when controlling the actuator drive (46) such that the actuating element (50) is braked before the end position is reached, wherein the end position value (P6) is defined in particular on the basis of a position signal sensed at the time of the abrupt increase on the force signal (F6).

3. Process according to claim 2,
**characterised in that**, after reaching the end position, the actuating element (50) is moved by a defined path into a coupling position (C1, C2) which is axially spaced from the end position.

4. Process according to any one of claims 2 or 3,
**characterised in**
**that**, at a later coupling procedure, the actuator drive (46) is controlled such that the actuating element (50) is moved directly into the coupling position (C1, C2), i.e. is stopped in the coupled position before reaching the end position.

5. Process according to any one of claims 1 to 4,
**characterised in**
**that** the coupling unit (12) comprises a synchronising mechanism (58, 59, 60; 58', 59', 60') which, in a synchronising position (S) of the actuating element (50), adjusts a first rotational speed of a coupling input part (42) and a second rotational speed of a coupling output part (43, 44) relative to one another,
wherein, during the coupling procedure, the actuator drive (46) is controlled such
**that** the travel speed of the actuating element (50) is reduced before the synchronising position (S) is reached.

6. Process according to claim 5, **characterised in**
**that** the travel speed of the actuating element (50) is again increased if a relative difference in rotational speed between the coupling input part (42) and the coupling output part (43, 44) drops below a predetermined value of rotational speed difference, and /or
**that** the actuating element (50) is returned into a neutral position (N), if after a predetermined period, the relative difference in rotational speed is still greater than the predetermined value of rotational speed difference.

7. Process according to any one of claims 1 to 6,
**characterised in**
**that** the process step of sensing the position signal comprises at least one of the following sub-steps:
sensing a path signal representing a path of the actuating element (50) and determining the position on the basis of the path signal;
sensing a rotational signal representing a rotational movement of the actuator drive (46) and determining the position on the basis of the rotational signal.

8. Process according to any one of claim 1 to 7,
**characterised in**
**that** the actuator drive (46) for moving the actuating element (50) is an electric motor, wherein the process step of sensing the force signal comprises the following sub-steps:
sensing the electric current of the electric motor and calculating the force (F) of the actuating element (50) on the basis of the amperage of the electric motor.

9. Drive assembly with a coupling unit in the driveline of a motor vehicle and with an actuating assembly (1) for actuating the coupling unit,
wherein, by means of the actuating assembly (1), the coupling unit (12) is selectively adjustable into a coupling position (C1, C2) in which torque is transmitted between a coupling input part (42) and coupling output part (43, 44), and into a neutral position (N) in which the coupling input part (42) and the coupling output part (43, 44) are freely rotatable relative to one another,
wherein the coupling unit (12) comprises a synchronising mechanism (58, 59, 60; 58', 59' 60') that effects an adjustment of rotational speed between the coupling input part (42) and the coupling output part (43, 44) before closing into the coupling position (C1, C2);
wherein the actuating assembly comprises:
an actuator drive (46) with a rotatingly drivable shaft;
a rotation translation convertor (47) which converts a rotational movement of the shaft into a translatory movement of the actuating element (50);
first sensor means (54, 55) which sense a position signal which represents the translatory movement of the actuating element (50);
second sensor means which sense a force signal representing a force of the actuator drive (46);and
an electronic control unit (ECU) for controlling the actuator drive (46), **characterized in that** the electronic control unit (ECU) is connected to the first sensor means (54) and to the second sensor means for linking a sensed position signal and a sensed force signal with each other for accurately determining the position of the actuating element (50) and for controlling the actuator drive (46).

10. Drive assembly according to claim 9,
**characterised in**
**that** the first sensor means (54, 55) comprise a path sensor which senses at least indirectly a movement of the actuating element (50), more particularly by means of a sensor target (55) fixed to the translation part (49), whose position is detectable by the first sensing means (54).

11. Drive assembly according to claim 9 or 10,
**characterised in**
**that** the first sensor means (54, 55) comprise an angle of rotation sensor which at least indirectly senses a rotational movement of the actuator drive (46), wherein the position of the actuating element (50) is determined on the basis of the sensed rotational movement of the actuator drive (46).

12. Drive assembly according to any one of claims 9 to 11,
**characterised in**
**that** the second sensor means comprise an electric current sensor which senses the electric current requirements of the actuator drive (46).

13. Drive assembly according to any one of claims 9 to 12,
**characterised in**
**that** the rotation translation convertor (47) comprises a threaded spindle with a spindle part (48) which is rotatingly drivable by the shaft, and
a translation part (49) threadingly connected to the spindle part (48) which transition part (49) is guided relative to the housing (26) in a rotationally fixed and longitudinally movable way, so that a rotation of the spindle part (48) effects an axial movement of the translation part (49), wherein the actuating part (50) is axially fixed to the translation part (49).

14. Drive assembly according to any one of claims 9 to 13,
**characterised in**
**that** the coupling input part (42) is connected to a driveshaft (9) in a rotationally fixed way, and
**that** the coupling output part (43, 44) is connected in a rotationally fixed way to a first drive gear (14) rotatably supported on the driveshaft (9).

15. Drive assembly according to any one of claims 9 to 14,
**characterised in**
**that** the coupling unit (12) comprises two coupling output parts (43, 44) and that a coupler (45) is provided in the form of a sliding sleeve which is held in a rotationally fixed and axially displaceable way relative to the coupling input part (42) and which for actuation is firmly connected to the actuating element (50) of the actuating assembly (1), wherein the coupler (45) is movable:
into a neutral position (N) in which the coupling input part (42), the first coupling output part (43) and the second coupling output part (44) are freely rotatable relative to one another, or
into a first coupling position (C1) in which the coupling input part (42) is connected to the first coupling output part (43) for transmitting torque, or
into a second coupling position (C2) in which the coupling input part (42) is connected to the second output part (44) for transmitting torque.

## Revendications

1. Procédé de commande d'un système d'actionnement d'un embrayage dans une ligne de transmission d'un véhicule automobile, sachant que le système d'actionnement comporte un entraînement d'actionneur (46) pour déplacer un élément d'actionnement (50) pour actionner l'unité d'embrayage (12), sachant que le procédé comporte les étapes suivantes :
détection d'un signal de positionnement représentant la position (P) de l'élément d'actionnement (50),
détection d'un signal de force représentant la force d'actionnement (F) pour déplacer l'élément d'actionnement (50),
**caractérisé par**:
combinaison d'un signal de positionnement détecté et d'un signal de force détecté correspondant pour déterminer une position exacte de l'élément d'actionnement,
commande de l'entraînement d'actionneur (46) au moyen d'une unité de régulation électronique (URE) en fonction du signal de positionnement et du signal de force de ce fait associé.

2. Procédé selon la revendication 1, **caractérisé en ce que** lors d'une première opération d'embrayage, une position finale de l'élément d'actionnement (45), qui représente une butée de fin de course de l'unité d'embrayage (12), est détectée par une hausse brutale du signal de force (F6) et une valeur de position finale (P6) correspondante est mémorisée, et
**en ce que** lors d'au moins une opération d'embrayage ultérieure, la valeur de position finale est prise en considération par l'unité de régulation électronique (URE) lors de la commande de l'entraînement d'actionneur (46) de telle manière que l'élément d'actionnement (50) est freiné avant d'atteindre la position finale, sachant que la valeur de position finale (P6) est définie en particulier sur la base d'un signal de positionnement détecté au moment de la hausse brutale du signal de force (F6).

3. Procédé selon la revendication 2, **caractérisé en ce que** l'élément d'actionnement (50) est déplacé après avoir atteint la position finale d'une course définie dans une position d'accouplement (C1, C2) axialement à distance de la position finale.

4. Procédé selon l'une quelconque des revendications 2 ou 3, **caractérisé en ce que** l'entraînement d'actionneur (46) est commandé lors d'une opération d'embrayage ultérieure de telle manière que l'élément d'actionnement (50) est déplacé directement dans la position d'accouplement (C1, C2), c'est-à-dire est arrêté dans la position d'accouplement avant d'atteindre la position finale.

5. Procédé selon l'une quelconque des revendications 1 à 4, **caractérisé en ce que** l'unité d'embrayage (12) comprend un mécanisme de synchronisation (58, 59, 60 ; 58', 59', 60'), lequel harmonise dans une position de synchronisation (S) de l'élément d'actionnement (50), l'un avec l'autre un premier régime d'une partie d'entrée d'embrayage (42) et un deuxième régime d'une partie de sortie d'embrayage (43, 44),
sachant que l'entraînement d'actionneur (46) est commandé lors de l'opération d'embrayage de telle manière,
que la vitesse d'avance de l'élément d'actionnement (50) est réduite avant d'atteindre la position de synchronisation.

6. Procédé selon la revendication 5, **caractérisé en ce que** la vitesse d'avance de l'élément d'actionnement (50) est à nouveau augmentée, lorsqu'une différence de régime relative entre la partie d'entrée d'embrayage (42) et la partie de sortie d'embrayage (43, 44) est tombée en dessous d'une valeur de régime différentielle prédéfinie, et/ou
**en ce que** l'élément d'actionnement (50) est reculé dans une position neutre (N), lorsque la différence de régime relative est après un laps de temps prédéterminé , toujours plus importante que la valeur de régime différentielle prédéfinie.

7. Procédé selon l'une quelconque des revendications 1 à 6, **caractérisé en ce que** l'étape de procédé de détection du signal de positionnement comprend au moins une des parties d'étape suivantes :
détection d'un signal de course représentant une course de l'élément d'actionnement (50) et détermination de la position à partir du signal de course,
détection d'un signal de rotation représentant un mouvement de rotation de l'entraînement d'entraîneur (46) et détermination de la position à partir du signal de rotation.

8. Procédé selon l'une quelconque des revendications 1 à 7, **caractérisé en ce que** l'entraînement d'actionneur (46) pour le déplacement de l'élément d'actionnement (50) est un moteur électrique, sachant que l'étape de procédé de détection du signal de force comprend les parties d'étape suivantes :
détection de l'intensité de courant du moteur électrique et calcul de la force (F) de l'élément d'actionnement (50) à partir de l'intensité de courant du moteur électrique.

9. Système d'entraînement avec une unité d'embrayage dans la ligne de transmission d'un véhicule automobile et avec un système d'actionnement (1) pour actionner l'unité d'embrayage
sachant que l'unité d'embrayage (12) peut être transférée au moyen du système d'actionnement (1) selon nécessité dans une position d'embrayage (C1, C2) dans laquelle un couple est transmis entre une partie d'entrée d'embrayage (42) et une partie de sortie d'embrayage (43, 44) et dans une position neutre (N) dans laquelle la partie d'entrée d'embrayage (42) et la partie de sortie d'embrayage (43, 44) peuvent être librement tournées l'une contre l'autre,
sachant que l'unité d'embrayage (12) comprend un mécanisme de synchronisation (58, 59, 60 ;58', 59',60'), qui produit une harmonisation de régime avant la fermeture dans la position d'embrayage (C1, C2) entre la partie d'entrée d'embrayage (42) et la partie de sortie d'embrayage (43, 44),
sachant que le système d'actionnement comporte un entraînement d'actionneur (46) avec un arbre pouvant être entraîné en rotation,
un convertisseur rotation-translation (47), qui convertit un mouvement de rotation de l'arbre en un mouvement translatoire d'un élément d'actionnement (50),
des premiers moyens de détection (54, 55), qui détectent un signal de positionnement représentant le mouvement translatoire de l'élément d'actionnement (50),
des deuxièmes moyens de détection, qui détectent un signal de force représentant la force de l'entraînement d'actionneur (46), et
une unité de régulation électronique (URE) pour commander l'entraînement d'actionneur (46), **caractérisé en ce que**
l'unité de régulation électronique (URE) est reliée aux premiers moyens de détection (54) et aux deuxièmes moyens de détection pour combiner entre eux un signal de positionnement détecté et un signal de force détecté pour la détermination de position exacte de l'élément d'actionnement (50) et pour l'utiliser pour la commande de l'entraînement d'actionneur (46).

10. Système d'entraînement selon la revendication 9, **caractérisé en ce que** les premiers moyens de détection (54, 55) comprennent un capteur de course, lequel détecte au moins indirectement un mouvement de l'élément d'actionnement (50) et en particulier au moyen d'un émetteur de signal (55) fixé sur la partie de déplacement (49) dont la position peut être saisie par les premiers moyens de détection (54).

11. Système d'entraînement selon la revendication 9 ou 10, **caractérisé en ce que** les premiers moyens de détection (54, 55) comprennent un capteur d'angle de rotation, lequel détecte au moins indirectement un mouvement de rotation de l'entraînement d'actionneur (46), sachant que la position de l'élément d'actionnement (50) est déterminée à partir du mouvement de rotation détecté de l'entraînement d'actionneur (46).

12. Système d'entraînement selon l'une quelconque des revendications 9 à 11, **caractérisé en ce que** les deuxièmes moyens de détection comprennent un capteur de courant, qui détecte le besoin en courant de l'entraînement d'actionneur (46).

13. Système d'entraînement selon l'une quelconque des revendications 9 à 12, **caractérisé en ce que** le convertisseur rotation-translation (47) comprend une tige filetée avec une partie tige (48), qui peut être entraînée en rotation par l'arbre et une partie déplacement (49) reliée par vissage à la partie tige (48), qui est guidée par rapport à un boîtier (26) solidaire en rotation et longitudinalement mobile de telle manière qu'une rotation de la partie tige (48) produit un déplacement axial de la partie déplacement (49),
sachant que l'élément d'actionnement (50) est fixé axialement à la partie déplacement (49).

14. Système d'entraînement selon l'une quelconque des revendications 9 à 13, **caractérisé en ce que**
la partie d'entrée d'embrayage (42) est reliée solidaire en rotation à l'arbre d'entraînement (9), et **en ce que** la partie de sortie d'embrayage (43, 44) est reliée solidaire en rotation à une première roue d'entraînement (14) logée pouvant tourner sur l'arbre d'entraînement (9).

15. Système d'entraînement selon l'une quelconque des revendications 9 à 14, **caractérisé en ce que** l'unité d'embrayage (12) comporte deux parties de sortie d'embrayage (43, 44), et
**en ce qu'**un élément de couplage (45) conçu sous la forme d'un manchon coulissant est prévu, qui est maintenu solidaire en rotation et pouvant être axialement déplacé par rapport à la partie d'entrée d'embrayage (42) et est relié fermement pour actionnement à l'élément d'actionnement (50) du système d'actionnement (1), sachant que l'élément de couplage (45) peut être transféré,
dans une position neutre (N), dans laquelle la partie d'entrée d'embrayage (42), la première partie de sortie d'embrayage (43) et la deuxième partie de sortie d'embrayage (44) peuvent être tournées librement l'une contre l'autre, ou
dans une première position d'accouplement (C1), dans laquelle la partie d'entrée d'embrayage (42) est reliée à la première partie de sortie d'embrayage (43) pour transmettre un couple, ou
dans une deuxième position d'accouplement (C2), dans laquelle la partie d'entrée d'embrayage (42) est reliée à la deuxième partie de sortie d'embrayage (44) pour transmettre un couple.
